# EUROPÄISCHE PATENTSCHRIFT

(11) **EP 3 921 251 B1**
(45) Veröffentlichungstag und Bekanntmachung des Hinweises auf die Patenterteilung: **02.04.2025**
(21) Anmeldenummer: 20720329.0
(22) Anmeldetag: 07.02.2020
(51) Int. Cl.: B65G 1/04, B65G 17/20, B65G 19/02, B65G 9/00, B65G 47/61

(54) **TRANSPORTTRÄGERSYSTEM MIT TRANSPORTTRÄGERN ZUM TRANSPORT VON HÄNGEWAREN**
TRANSPORT CARRIER SYSTEM COMPRISING TRANSPORT CARRIERS FOR TRANSPORTING SUSPENDED GOODS
SYSTÈME DE SUPPORTS DE TRANSPORT DOTÉ DE SUPPORTS DE TRANSPORT POUR TRANSPORTER DES MARCHANDISES SUSPENDUES

(30) Priorität: 07.02.2019 AT 500922019
(43) Veröffentlichungstag der Anmeldung: 15.12.2021
(73) Patentinhaber: TGW Mechanics GmbH, 4600 Wels (AT)
(72) Erfinder: KRIECHBAUM, Thomas, 4701 Bad Schallerbach (AT); RAUSCH, Martin, 4810 Gmunden (AT)
(74) Vertreter: Burger, Hannes
(86) Internationale Anmeldenummer: PCT/AT2020/060037
(87) Internationale Veröffentlichungsnummer: WO 2020/160585

(56) Entgegenhaltungen:
- EP-A1- 1 547 943
- EP-A1- 2 554 497
- EP-A1- 2 752 378
- DE-A1- 3 227 736
- DE-B1- 1 803 757
- DE-C1- 3 605 317
- DE-U1- 202010 008 717
- DE-U1- 9 106 795
- US-A- 4 866 255

## Beschreibung

Die Erfindung betrifft ein Transportträgersystem für eine Hängefördervorrichtung, wie im Oberbegriff des Anspruches 1 beschrieben.

Die DE 32 27 736 A1 offenbart den Oberbegriff des Anspruches 1, insbesondere eine Hängefördervorrichtung mit einer Antriebsvorrichtung und durch diese bewegbare Transportträger zum Transport von Hängewaren. Die Transportträger umfassen jeweils einen universell verwendbaren Basiskörper und einen am Basiskörper über eine Verbindungsvorrichtung auswechselbar befestigten Tragkörper zum Transport von einer Hängeware. Der Basiskörper umfasst einen Antriebsabschnitt, welcher mit der Antriebsvorrichtung der Hängefördervorrichtung zusammenwirken kann.

Verschiedene Ausführungen von Tragkörpern zum Transport von Hängewaren sind aus der DE 18 03 757 B1, US 4,866,255 A, EP 2 752 378 A1 und EP 2 554 497 A1 bekannt.

Die EP 3 028 960 A1 offenbart eine Hängefördervorrichtung mit einer Antriebsvorrichtung und durch diese bewegbare Transportträger zum Transport von Hängewaren. Die Transportträger umfassen jeweils einen Basiskörper und einen am Basiskörper über eine Verbindungsvorrichtung auswechselbar befestigten Tragkörper mit einer vollständig umschlossenen Aufnahmeöffnung zum Einhängen wenigstens eines Bügels einer Hängeware. Die Antriebsvorrichtung ist als Förderkette gestaltet und jedes Kettenglied bildet den Basiskörper. Die Tragkörper können bei geschlossener Förderkette (daher ohne Öffnen der Förderkette) ausgewechselt werden. Die Verbindungsvorrichtung ist als Steckverbindung gestaltet. Bevorzugt umfasst die Steckverbindung zumindest ein längs einer Einführrichtung der Steckverbindung wirkendes Formschlusselement (Rastnase). Ist die Steckverbindung ohne zusätzlichem Formschlusselement (Rastnase) gestaltet, ist der Tragkörper ausschließlich über einen entsprechend ausgelegten Kraftschluss am Basiskörper befestigt, sodass der Auswechselvorgang nur mit hohem Kraftaufwand durchgeführt werden kann. Ist hingegen zusätzlich das Formschlusselement (Rastnase) vorgesehen ist, muss dieses auch eine Gewichtskraft aufnehmen.

Eine vergleichbare Verbindungsvorrichtung ist in der EP 3 050 828 B1 offenbart.

Allgemein versteht man unter einer "Hängeware" eine Ware, die beispielswiese über einen Bügel hängend transportiert wird. Klassische Beispiele von Hängeware sind Kleidungsstücke, die an Kleiderbügeln hängen, oder Transporttaschen zur Aufnahme von Waren. "Hängeware" steht im vorliegenden Zusammenhang im Gegensatz zu "Liegeware". Bei Liegeware handelt es sich um Ware, die auf einem Untergrund ruhend transportiert wird, der sich bewegt. Demgegenüber hängt Hängeware unterhalb der Transportträger bzw. der Hängefördervorrichtung.

Verschiedene Ausführungen von Transporttaschen sind aus der DE 10 2004 018 569 A1, DE 202017 106 993 U1 und WO 2018/130712 A2 bekannt.

Eine Aufgabe der Erfindung ist es, ein Transportträgersystem für eine Hängefördervorrichtung mit einer verbesserten Verbindungsvorrichtung zwischen dem Basiskörper und Tragkörper anzugeben. Insbesondere soll der Tragkörper vom Basiskörper mit wenig Aufwand und einfachsten technischen Hilfsmittel (Werkzeugen) ausgewechselt werden können.

Die Aufgabe der Erfindung wird durch die Merkmale des Anspruches 1 gelöst.

Dadurch kann unabhängig von der Konfiguration der (verschiedenen) Tragkörper stets derselbe und optimiert ausgelegte Basiskörper (universell) verwendet werden. Während der Basiskörper verschiedenste Funktionen abbilden kann/muss, übernehmen die Tragkörper ausschließlich eine einzige Funktion.

So umfasst der Basiskörper den Antriebsabschnitt, beispielweise zumindest eine Führungsrolle, welche entlang einer Führungsvorrichtung der Hängefördervorrichtung abrollbar aufliegt, und zumindest einen Eingriffsabschnitt, welcher mit einer Antriebsvorrichtung der Führungsrolle zusammenwirkt und mit einer Antriebskraft beaufschlagt wird. Auch kann der Antriebsabschnitt mit einem Anschlag ausgestattet sein, beispielweise an einer Vorderseite des Hängeträgers, mit welchem ein erster Hängeträger beispielsweise an einem Stopperelement aufläuft, und/oder mit einem Anschlag ausgestattet sein, beispielweise an einer Rückseite des Hängeträgers, mit welchem ein zweiter Hängeträger auf einem ersten Hängeträger aufläuft. Daher kann der Antriebsabschnitt die Funktionen "Führen des Hängeträgers", "Fortbewegung des Hängeträgers" und/oder "Positionieren des Hängeträgers" umsetzen. Ist der Basiskörper zusätzlich mit einem Identifikationsmittel versehen, wird vom Basiskörper auch die Funktion "Identifikation Hängeträger" übernommen.

Die Tragkörper übernehmen unabhängig von deren Ausgestaltungen jedoch ausschließlich die Funktion "Aufnahme der Hängeware".

Unterschiedliche Tragkörper weisen jedoch einen Basiskörperanbindungsabschnitt mit einem einheitlichen (identischen) ersten Formschlusselement oder zweiten Formschlusselement auf.

Bevorzugt ist der Basiskörper aus Kunststoff und im Spritzgießverfahren einstückig hergestellt. Bevorzugt sind die Tragkörper aus Kunststoff und im Spritzgießverfahren einstückig hergestellt. Es kann sich von Vorteil erweisen, wenn sich die Materialeigenschaften vom Basiskörper und Tragkörper unterscheiden. Insbesondere kann das Kunststoffmaterial des Basiskörpers bessere mechanische Eigenschaften, wie Festigkeit, Schlagzähigkeit, Verformbarkeit und dergleichen, aufweisen, als das Kunststoffmaterial des Tragkörpers / der verwendeten Tragkörper. Unterschiedliche Tragkörper können unterschiedliche Formgebung und/oder unterschiedliche Materialeigenschaften verwenden. Beispielweise kann der Tragkörper in einer ersten Konfiguration mit einer vollständig umschlossenen Aufnahmeöffnung und in einer zweiten Konfiguration mit einem Aufhängehaken gestaltet werden. Der Tragkörper kann in einer ersten Konfiguration und in einer zweiten Konfiguration unterschiedliche Materialeigenschaften aufweisen. Beispielweise ist der Tragkörper in einer ersten Konfiguration mit einer höheren Materialdichte gestaltet, als der Tragkörper in einer zweiten Konfiguration. Anderenfalls können die Tragkörper in einer ersten Konfiguration mit einem Aufhängehaken unterschiedliche Materialeigenschaften und/oder die Tragkörper in einer zweiten Konfiguration mit einer vollständig umschlossenen Aufnahmeöffnung unterschiedliche Materialeigenschaften aufweisen.

Je nach Transportanforderung ist ausschließlich der Tragkörper auszuwechseln, der Basiskörper bleibt derselbe. Ist die Hängeware ein Kleidungsstück, das an einem Kleiderbügel hängt, verwendet man vorzugsweise den Tragkörper in der zweiten Konfiguration mit einem Aufhängehaken und ist die Hängeware eine Transporttasche verwendet man vorzugsweise den Tragkörper in der ersten Konfiguration mit einer vollständig umschlossenen Aufnahmeöffnung.

Mit der Konfiguration verschiedener Tragkörper wird auf die zunehmenden Anforderungen an die Flexibilität von Lager- und Kommissioniersystemen reagiert. Im E-Commerce und besonders in der Textilbranche muss mit einem enorm hohen Retourenanteil gerechnet werden. Gerade im Retourenbereich hat es sich von Vorteil erwiesen, wenn die retournierten Waren mit einem Hängefördersystem gelagert, sortiert und kommissioniert werden. Die Waren werden als Hängeware manipuliert. Hängeware sind Kleidungsstücke, die an Kleiderbügeln hängen, oder Transporttaschen zur Aufnahme von Waren. Mit den Transporttaschen kann nahezu ein unbegrenztes Warensortiment manipuliert werden. Beispielweise sind die Waren (wie Schuhe, Hemden, Pullover, T-Shirts, Accessoires) in Kartons, Polybags, und dergleichen verpackt.

Vor diesem Hintergrund können Tragkörper in einer ersten Konfiguration mit einem Aufhängehaken oder in einer zweiten Konfiguration mit einer vollständig umschlossenen Aufnahmeöffnung verwendet werden. Tragkörper in einer ersten Konfiguration mit einer vollständig umschlossenen Aufnahmeöffnung transportieren die hängenden Transporttaschen (Hängetaschen), welche die Waren aufnehmen. Tragkörper in einer zweiten Konfiguration mit einem Aufhängehaken transportieren Kleidungsstücke auf Kleiderbügeln.

Gemäß der Erfindung umfasst die Verbindungsvorrichtung in einem der Basis- und Tragkörperanbindungsabschnitte eine senkrecht zur Längsachse verlaufende Profilnut (erstes Formschlusselement) und in einem der Basis- und Tragkörperanbindungsabschnitte einen senkrecht zur Längsachse verlaufenden Profilfortsatz (zweites Formschlusselement),
- wobei die Profilnut eine Hinterschneidung und in Richtung ihrer Längserstreckung endseitig eine Einschuböffnung ausbildet,
- wobei der Profilfortsatz einen Profilsteg und einen am Profilsteg querschnittserweiternd angeformten Profilkopf umfasst,
- wobei der Profilfortsatz über die Einschuböffnung in einer senkrecht zur Längsachse ausgerichteten Einschubrichtung in die Profilnut einschiebbar ist.

Es erweist sich von Vorteil, wenn die Verbindungsvorrichtung komplementär zueinander ausgeführte und ineinandergreifende Formschlusselemente umfasst und eine Formschlussverbindung bilden, wenn der Tragkörper am Basiskörper angebracht ist. Die Formschlusselemente sind dabei starr ausgebildet. Derartige starre Formschlusselemente sind einfach zu fertigen und kann dadurch die Verbindungsvorrichtung kostengünstig hergestellt werden. Zudem sind starre Formschlusselemente langlebiger und unempfindlicher gegen Defekte durch oftmalige Auswechselvorgänge. Das erste Formschlusselement (hinterschnittene Profilnut) ist im Tragkörperanbindungsabschnitt und das zweite Formschlusselement (Profilfortsatz) ist im Basiskörperanbindungsabschnitt angeordnet. Umgekehrt kann das erste Formschlusselement (hinterschnittene Profilnut) im Basiskörperanbindungsabschnitt und das zweite Formschlusselement (Profilfortsatz) im Tragkörperanbindungsabschnitt angeordnet werden. Das erste Formschlusselement (hinterschnittene Profilnut) und das zweite Formschlusselement (Profilfortsatz) sind in einer bevorzugten Ausführung im Querschnitt im Wesentlichen T-förmig gestaltet. Anderenfalls ist das erste Formschlusselement eine Profilnut mit einer hohlzylindrischen Hinterschneidung und das zweite Formschlusselement ein Profilfortsatz mit einem zylindrischen Profilkopf, dessen Durchmesser größer ist als eine Breite des Profilsteges. Im Rahmen der Erfindung können das erste Formschlusselement und zweite Formschlusselement auch andere Querschnittsformen ausbilden.

Eine solche Formschlussverbindung zeichnet sich auch dadurch aus, dass der Profilfortsatz durch eine senkrecht zur Längsachse ausgerichtete Einschubbewegung in die Profilnut eingeschoben werden kann. Die Schiebebewegung kann mit geringem Kraftaufwand und ohne zusätzlichem Werkzeug durchgeführt werden. Insbesondere kann die Formschlussverbindung ungeachtet dessen, ob eine bestimmte Fügekraft erreicht oder auch überschritten wird, hergestellt werden, wie dies bei kraftschlüssigen Verbindungsvorrichtungen der Fall ist.

Ebenso eignen sich die Formschlusselemente zur Herstellung einer insbesondere gegenüber Drehbewegungen (um eine Vertikalachse) und Zugbeanspruchung (in Richtung einer Vertikalachse infolge einer Gewichtskraft) belastbaren Verbindung zwischen dem Basiskörper und Tragkörper. Die Verbindung ist verwindungssteif und tragfähig, auch wenn der Tragkörper über eine einzige Verbindungsvorrichtung auswechselbar am Basiskörper befestigt ist.

Die Verbindungsvorrichtung erlaubt ein rasches Auswechseln der Tragkörper und dies weitestgehend ohne zusätzlichem Werkzeug.

Gemäß einer Ausführung der Erfindung ist es vorgesehen, dass die Profilnut im Tragkörperanbindungsabschnitt und der Profilfortsatz im Basiskörperanbindungsabschnitt angeordnet sind. Das zweite Formschlusselement (Profilfortsatz) ist tendenziell kleinbauender als das erste Formschlusselement (Profilnut). Ist das zweite Formschlusselement (Profilfortsatz) im Basiskörperanbindungsabschnitt am Tragkörper vorgesehen, können die Tragkörper platzsparender auf "Lagervorrat" gehalten werden.

Nach einer vorteilhaften Ausgestaltung umfasst der Transportträger eine Vorderwand und eine Rückwand, und die Profilnut ist durch eine sich von der Vorderwand in Richtung der Rückwand erstreckende Profilnut gebildet. Die Profilnut erstreckt sich ausgehend von der Vorderwand über eine Länge und endet vorzugsweise knapp vor der Rückwand. Der Tragkörperanbindungsabschnitt, sofern in diesem die (hinterschnittene) Profilnut vorgesehen ist, oder Basiskörperanbindungsabschnitt, sofern in diesem die (hinterschnittene) Profilnut vorgesehen ist, weist gegenüber der (hinterschnittenen) Profilnut eine größere Länge auf, sodass am der Rückwand benachbarten Profilnutende ein Materialsteg stehen bleibt. Das der Vorderwand benachbarte Profilnutende bildet die Einschuböffnung, welche in die Vorderwand mündet. Dadurch wird eine Einschubrichtung für den Tragkörper vorgegeben und eine falsche Ausrichtung eines ausgewechselten Tragkörpers vermieden, was zumal bei asymmetrischen Hängeträgern nachteilig wäre. Grundsätzlich kann der Materialsteg auch als Einschubbegrenzung (starrer Anschlag) dienen, gegen welchen der Profilsteg anliegt, wenn dieser vollständig in die Profilnut eingeschoben wurde.

Ist die Profilnut durch eine zum Tragkörper und über ihre Längserstreckung durchgehend geöffnete Profilnut gebildet, kann eine Querschnittskontur insbesondere im Spritzgießverfahren einfach hergestellt werden. Auch erweist es sich von Vorteil, dass nach dem Entfernen eines Tragkörpers über die geöffnete Profilnut selbst die Hinterschneidung gut zugänglich ist und die Profilnut gereinigt werden kann. Damit lassen sich Verunreinigungen in der Profilnut beseitigen, sodass eine zuverlässige Verbindung zwischen dem Basiskörper und Tragkörper auch nach oftmaligen Auswechselvorgängen sichergestellt ist.

Nach einer besonders vorteilhaften Ausgestaltung ist es vorgesehen, dass die Verbindungsvorrichtung gegenseitig in Eingriff bringbare Verriegelungselemente umfasst, welche derart angeordnet und ausgebildet sind, dass der Basiskörper und Tragkörper in Längsrichtung der Profilnut gegenseitig verschiebefest arretiert sind, wenn der auswechselbare Tragkörper am Basiskörper angebracht ist. Die Verriegelungselemente dienen der Arretierung der Relativlage zwischen Basiskörper und Tragkörper. Insbesondere werden die Verriegelungselemente beim Zusammenfügen des Basiskörpers und Tragkörpers wirksam, indem diese auf der Verschiebebewegung automatisch miteinander in Eingriff verbracht werden.

Bevorzugt umfassen die Verriegelungselemente erste Verriegelungselemente, welche in einem der Basis- und Tragkörperanbindungsabschnitte zu beiden Seiten der Profilnut angeordnete elastisch nachgiebige Federarme mit jeweils an einem Federbügel angeformter Rastnase gebildet sind, und zweite Verriegelungselemente umfassen, welche in einem der Basis- und Tragkörperanbindungsabschnitte zu beiden Seiten des Profilsteges angeordnete Rastöffnungen gebildet sind. Die ersten Verriegelungselemente (biegeelastische Federarme mit je einer Rastnase) sind im Tragkörperanbindungsabschnitt und die zweiten Verriegelungselemente (Rastöffnungen) sind im Basiskörperanbindungsabschnitt angeordnet. Umgekehrt können die ersten Verriegelungselemente (biegeelastische Federarme mit je einer Rastnase) im Basiskörperanbindungsabschnitt und die zweiten Verriegelungselemente (Rastöffnungen) im Tragkörperanbindungsabschnitt angeordnet werden. Die Federarme sind jeweils in einer senkrecht zu ihrer Haupterstreckungsrichtung verlaufenden Biegerichtung elastisch biegbar und auf einem Federbügel mit in der Biegerichtung vorragenden Rastnasen versehen. In der Eingriffsposition der Verriegelungselemente werden die Rastnasen gegen eine Umrandung der Rastöffnung angelegt.

Gemäß einer Ausführung ist es vorgesehen, dass die Verbindungsvorrichtung in einem der Basis- und Tragkörperanbindungsabschnitte zu beiden Seiten des Profilsteges angeordnete Aufnahmeschlitze umfasst, welche jeweils eine in Einschubrichtung des Tragkörpers verlaufende Stützfläche und eine in einem in Einschubrichtung des Tragkörpers hinterem Endbereich angeordnete Rastöffnung ausbilden. Die Aufnahmeschlitze sind im Basiskörperanbindungsabschnitt angeordnet, sofern die Federarme im Tragkörperanbindungsabschnitt vorgesehen sind. Umgekehrt können die Aufnahmeschlitze im Tragkörperanbindungsabschnitt angeordnet werden, sofern die Federarme im Basiskörperanbindungsabschnitt vorgesehen werden. Wird der Tragkörper relativ zum Basiskörper in Einschubrichtung senkrecht zur Längsachse bewegt, werden die Federarme durch die und an den Stützflächen (gleitend) aufliegenden Rastnasen beispielsweise nach innen gebogen und entspannen sich nach außen, sobald die Rastnasen die Umrandung der Rastöffnungen passiert haben. Bei geeigneter Form, insbesondere einer Sägezahnform der Rastnasen kann der Tragkörper dann nicht mehr ohne weiteres entgegen der Einschubrichtung von dem Basiskörper entfernt werden, weil die Rastnasen mit der Umrandung der Rastöffnung eine formschlüssige Verbindung eingehen.

Die formschlüssige Verbindung kann aufgehoben werden, indem die Federarme in einer senkrecht zu ihrer Haupterstreckungsrichtung verlaufenden Biegerichtung derart ausgelenkt werden, dass die Rastnasen wieder außer Eingriff mit der Umrandung der Rastöffnungen gebracht werden. Gleichzeitig wird der Tragkörper entgegen der Einschubrichtung in senkrechter Richtung zur Längsachse bewegt.

Die Verbindungsvorrichtung kann hierzu Zugangskanäle aufweisen, in welche die Rastöffnungen münden. Vorzugsweise kann ein Werkzeug in die Zugangskanäle eingeführt und mit diesem die Rastnasen aus den Rastöffnungen herausgehebelt werden. Als Werkzeug genügt ein Schraubendreher.

Es kann sich auch von Vorteil erweisen, wenn der Tragkörper zusätzlich
- eine im Wesentlichen parallel zur Längsachse verlaufende vordere Seitenwand,
- eine im Wesentlichen parallel zur Längsachse verlaufende hintere Seitenwand,
- eine zwischen der vorderen Seitenwand und hinteren Seitenwand verlaufende untere Seitenwand,
- einen durch die vordere Seitenwand, hintere Seitenwand und untere Seitenwand gebildeten Aufnahmeabschnitt zum Aufhängen eines Bügels der Hängeware,
- einen in den Aufnahmeabschnitt mündenden Zugangskanal, über welchen der Bügel der Hängeware in den Aufnahmeabschnitt eingeführt wird,
- an der vorderen Seitenwand und hinteren Seitenwand in unteren Wandabschnitten in Richtung zur unteren Seitenwand geneigt aufeinander zulaufende Führungsränder, und
- eine Transportsicherung umfasst, welche mit einem Vertikalabstand oberhalb des Aufnahmeabschnitts angeordnet ist und eine Anschlagfläche ausbildet, welche Anschlagfläche eine Relativverlagerung des Bügels in Richtung zur Transportsicherung begrenzt oder erschwert.

Dadurch kann einerseits ein "Hochsteigen" des Bügels an einem Führungsrand in begrenztem Ausmaß zugelassen werden und andererseits kann ein "Ausfädeln" des Bügels von dem Aufnahmeabschnitt über den Zugangskanal vermieden werden. Der Transport der Hängeware auf Bügeln kann demnach zuverlässig erfolgen und selbst bei hohen Transportgeschwindigkeiten kann der Verlust von Hängewaren vermieden werden.

Die Transportsicherung wird vorwiegend bei einem Tragkörper in einer zweiten Konfiguration mit einem Aufhängehaken zum Transport von Kleidungsstücken auf Kleiderbügeln eingesetzt.

Eine besonders vorteilhafte Ausführung liegt darin, wenn die Transportsicherung einen an der hinteren Seitenwand angeordneten, elastisch nachgiebigen Federarm mit einem Federbügel und einem am vorragenden Ende angeordneten Anschlag aufweist, wobei der Anschlag in den Zugangskanal vorragt und an seiner dem Aufnahmeabschnitt zugewandten Seitenwand die Anschlagfläche ausbildet. Der Transportträger kann besonders einfach beladen und die Hängeware besonders zuverlässig transportiert werden. Soll der Transportträger mit einer Hängeware bestückt werden, wird der Bügel zum Zugangskanal zugeführt. Der Bügel drückt (verdrängt) alleinig durch die Gewichtskraft den Federbügel (aus einer Sperrstellung) soweit von dem Zugangskanal in Richtung zur hinteren Seitenwand (in eine Freigabestellung), dass dieser in Richtung auf den Aufnahmeabschnitt hinabbewegt werden kann. Sobald der Federbügel vom Bügel "freigegeben" wurde, wird der Federbügel aus der ausgelenkten Freigabestellung zurück in die Sperrstellung bewegt. In der Sperrstellung wird ein "Hochsteigen" des Bügels an einem Führungsrand durch den Anschlag blockiert. Der Vertikalabstand zwischen der Transportsicherung und dem Aufnahmeabschnitt ist bevorzugt derart ausgelegt, dass sich der Bügel auch in der höchsten Bügelposition an dem Führungsrand und gegebenenfalls an zumindest einem der betreffenden ersten und zweiten Auflageabschnitte abstützen kann. Soll die Hängeware vom Transportträger entfernt werden, wird der Bügel um eine in Transportrichtung verlaufende Achse verschwenkt und seitlich vom Aufnahmeabschnitt herausbewegt.

Der elastisch nachgiebige Federarm ist aus Kunststoff und im Spritzgießverfahren einstückig mit dem Tragkörper hergestellt. Ebenso ist es aber auch möglich, dass der elastisch nachgiebige Federarm getrennt vom Tragkörper vorzugsweise aus Metall und der Tragkörper getrennt vom Federarm im Spritzgießverfahren hergestellt sind. Der Federarm wird an der hinteren Seitenwand mit dem Tragkörper verbunden, beispielsweise durch eine Form- und/oder Kraftschlussverbindung. Möglich ist auch eine stoffflüssige Verbindung. Der elastisch nachgiebige Federarm bildet eine einseitig eingespannte Blattfeder.

Nach einer weiteren Ausführung kann es vorgesehen sein, das die hintere Seitenwand und der Federbügel miteinander in Eingriff bringbare Führungselemente umfassen. Der Federbügel kann nach einer möglichen Ausführung mit einem ersten Führungselement und einem zweiten Führungselement versehen werden. Vorzugsweise ragen das erste Führungselement und zweite Führungselement vom Federbügel in Richtung zur hinteren Seitenwand vor. Sind das erste Führungselement und zweite Führungselement vorgesehen, können diese einerseits einander gegenüberliegen und symmetrisch zu einer Längsachse des Federbügels angeordnet werden. Sind das erste Führungselement und zweite Führungselement vorgesehen, können diese andererseits einander gegenüberliegen und in Richtung einer Längsachse des Federbügels zueinander versetzt angeordnet werden. Das erste Führungselement und zweite Führungselement können nach einer möglichen Ausführung im Endbereich des Federbügels angeordnet werden und erstrecken sich maximal über ein Drittel der Länge des Federbügels. Das erste Führungselement und zweite Führungselement bilden konkret Führungsvorsprünge. Das erste Führungselement und zweite Führungselement können nach einer möglichen Ausführung im Mitten- und Endbereich des Federbügels angeordnet werden und erstrecken sich mindestens über ein Drittel der Länge des Federbügels.

Der Federbügel kann nach einer möglichen Ausführung aber auch mit einem einzigen Führungselement versehen werden. Das Führungselement bildet konkret einen Führungszapfen.

Die hintere Seitenwand kann nach einer möglichen Ausführung mit einem ersten Führungselement und einem zweiten Führungselement versehen werden. Das erste Führungselement vom Federbügel und das erste Führungselement von der hinteren Seitenwand sind komplementär ausgebildet. Ebenso sind das zweite Führungselement vom Federbügel und das zweite Führungselement von der hinteren Seitenwand komplementär ausgebildet. Sind das erste / zweite Führungselement des Federbügels durch Führungsvorsprünge gebildet, sind das erste / zweite Führungselement der hinteren Seitenwand durch Führungsvertiefungen gebildet. Ist das Führungselement des Federbügels durch einen Führungszapfen gebildet, ist das Führungselement der hinteren Seitenwand durch eine Führungsbohrung gebildet.

Ist der Federbügel mit einem einzigen Führungselement und die hinteren Seitenwand mit einem einzigen Führungselement versehen, so sind das Führungselement vom Federbügel und das Führungselement von der hinteren Seitenwand komplementär ausgebildet.

Insbesondere erweist es sich von Vorteil, wenn die ersten / zweiten Führungselemente nicht nur in der Freigabestellung, sondern auch in der Sperrstellung des Federbügels miteinander eingreifen und damit der Federbügel in der Sperrstellung / Freigabestellung seitlich durch das / die Führungselement(e) an der hinteren Seitenwand abgestützt ist.

Insbesondere erweist es sich von Vorteil, wenn der Anschlag das erste / zweite Führungselement, welche(s) am Federbügel angeordnet sind, ausbildet.

Es kann sich auch von Vorteil erweisen, wenn die Transportsicherung einen an der vorderen Seitenwand angeordneten, elastisch nachgiebigen ersten Federarm mit einem Federbügel und einem am vorragenden Ende angeordneten Anschlag und einen an der hinteren Seitenwand angeordneten, elastisch nachgiebigen zweiten Federarm mit einem Federbügel und einem am vorragenden Ende angeordneten Anschlag aufweist, wobei die Anschläge jeweils in den Zugangskanal vorragen und an einer dem Aufnahmeabschnitt zugewandten Seitenwand die Anschlagflächen ausbilden. Nach dieser Ausführung wird der Bügel über den Zugangskanal vorerst auf den elastisch nachgiebigen ersten Federarm und elastisch nachgiebigen zweiten Federarm übergeben, welche infolge der Gewichtskraft des Bügels auseinandergedrückt werden. Der Bügel drückt (verdrängt) alleinig durch die Gewichtskraft den Federbügel des ersten Federarms (aus einer Sperrstellung) soweit von dem Zugangskanal in Richtung zur vorderen Seitenwand (in eine Freigabestellung) und den Federbügel des zweiten Federarms (aus einer Sperrstellung) soweit von dem Zugangskanal in Richtung zur hinteren Seitenwand (in eine Freigabestellung), dass dieser in Richtung auf den Aufnahmeabschnitt bewegt werden kann. Sobald die Federbügel vom Bügel "freigegeben" wurden, werden die Federbügel jeweils aus der ausgelenkten Freigabestellung zurück in die Sperrstellung bewegt. In der Sperrstellung wird ein "Hochsteigen" des Bügels an einem Führungsrand durch die Anschläge blockiert. Der Vertikalabstand zwischen der Transportsicherung und dem Aufnahmeabschnitt ist bevorzugt derart ausgelegt, dass sich der Bügel auch in der höchsten Bügelposition an dem Führungsrand und gegebenenfalls an zumindest einem der betreffenden ersten und zweiten Auflageabschnitte abstützen kann. Soll die Hängeware vom Transportträger entfernt werden, wird der Bügel um eine in Transportrichtung verlaufende Achse verschwenkt und seitlich vom Aufnahmeabschnitt herausbewegt.

Es kann sich auch von Vorteil erweisen, wenn die Transportsicherung eine an der hinteren Seitenwand angeordnete Erhebung umfasst, welche in den Zugangskanal vorragt und die Anschlagfläche ausbildet. Nach dieser Ausführung ist eine Erhebung vorgesehen, welche im Gegensatz zu den obigen Ausführungen mit einem elastisch nachgiebigen Federarm oder einem elastisch nachgiebigen ersten Federarm und einem elastisch nachgiebigen zweiten Federarm im Wesentlich starr ausgebildet ist. Die Erhebung bildet im Zugangskanal eine "Störkontur", welche eine Relativverlagerung des Bügels in Richtung zur Transportsicherung erschwert. Dadurch kann einerseits ein "Hochsteigen" des Bügels an einem Führungsrand in begrenztem Ausmaß zugelassen werden und andererseits kann ein "Ausfädeln" des Bügels von dem Aufnahmeabschnitt über den Zugangskanal behindert werden. Der Führungsrand und die Erhebung verlaufen ineinander (schließen aneinander an) und schließen einen Winkel, insbesondere einen Winkel kleiner 150° ein. Dadurch erfährt ein an einem Führungsrand "hochsteigender" Bügel an der Anschlagfläche eine Umkehr in der Bewegungsrichtung.

Es kann sich auch von Vorteil erweisen, wenn der Basiskörper einen senkrecht zur Längsachse verlaufenden Aufnahmeschacht mit einem in Richtung seiner Längserstreckung endseitig ausgebildeten Öffnungsschlitz und ein über den Öffnungsschlitz in den Aufnahmeschacht einsteckbares Identifikationsmittel, insbesondere einen Transponder, umfasst. Der Aufnahmeschacht bildet eine Aufnahmeebene aus, welche in Förderrichtung des Transportträgers verläuft. Somit ist auch das Identifizierungsmittel mit seiner Hauptfläche quer zur Förderrichtung ausgerichtet, also zur Seite hin. Damit können Lesefehler nahezu ausgeschlossen werden. Auch kann eine Überdeckung mit anderen Identifizierungsmittel vermieden werden. Das Identifikationsmittel ist vorzugsweise ein RFID-Transponder (radio frequency identification). Das Identifikationsmittel dient zum Beispiel zur Speicherung von Identifikationsinformationen zum Transportträger und gegebenenfalls zu der vom Transportträger transportierten Hängeware. Ferner kann in dem als Datenspeicherelement ausgelegten Identifikationsmittel auch eine Information zum zurückgelegten bzw. zurückzulegenden Transportweg gespeichert sein. Diese Information kann für die Materialflusssteuerung herangezogen.

Gemäß einer Ausgestaltung der Erfindung ist es vorgesehen, dass der Aufnahmeschacht einen zum Tragkörper geöffneten Boden und einen in Richtung zum Boden vorragenden elastisch nachgiebigen Federarm mit einer Auflagefläche umfasst, sodass sich das Identifikationsmittel, insbesondere der Transponder, im Aufnahmeschacht an der Auflagefläche abstützt und dieses durch den Federarm gehalten wird. Das Identifikationsmittel ist nicht dauerhaft im Basiskörper integriert angeordnet, sondern kann bei Bedarf (Defekt, Umstellung auf eine neue Transpondertechnologie) ausgewechselt werden.

Von Vorteil ist auch, wenn der Aufnahmeschacht und das Identifikationsmittel, insbesondere der Transponder, zwischen dem Antriebsabschnitt und dem Tragkörperanbindungsabschnitt angeordnet sind. Damit ist ein zuverlässiger Lesevorgang möglich.

Zum besseren Verständnis der Erfindung wird diese anhand der nachfolgenden Figuren näher erläutert.

Es zeigen jeweils in stark vereinfachter, schematischer Darstellung:
- Fig. 1: eine Hängefördervorrichtung zum Transport von Hängewaren, in perspektivischer Ansicht;
- Fig. 2a: eine Hängefördervorrichtung mit einer Führungsvorrichtung und Antriebsvorrichtung zum reibschlüssigen Antrieb der Transportträger, in Stirnansicht und teilweise geschnitten;
- Fig. 2b: eine Hängefördervorrichtung mit einer Führungsvorrichtung und Antriebsvorrichtung zum formschlüssigen Antrieb der Transportträger, in Stirnansicht und teilweise geschnitten;
- Fig. 2c: eine Hängefördervorrichtung mit einer Führungsvorrichtung jedoch ohne Antriebsvorrichtung für die Transportträger, in Seitenansicht;
- Fig. 3a, 3b: eine Transporttasche mit einem Taschenkörper, Fig. 3a in der Transportstellung und Fig. 3b in der Beladestellung oder Entladestellung (Ware nicht eingetragen), in perspektivische Ansichten;
- Fig. 4: ein Transportträgersystem für eine Hängefördervorrichtung mit einem universell verwendbaren Basiskörper und über eine Verbindungsvorrichtung auswechselbaren Tragkörpern, in einer ersten Konfiguration mit einer vollständig umschlossenen Aufnahmeöffnung zum Transport einer (in Fig. 3a, 3b dargestellten) Transporttasche und in einer zweiten Konfiguration mit einem Aufhängehaken zum Transport eines (nur teilweise dargestellten) Kleiderbügels, in perspektivischer Ansicht;
- Fig. 4a, 4b: einen Tragkörper mit einer ersten Ausführung einer Transportsicherung in unterschiedlichen Ansichten;
- Fig. 4c, 4d: einen Tragkörper mit einer zweiten Ausführung einer Transportsicherung in unterschiedlichen Ansichten;
- Fig. 4e, 4f: einen Tragkörper mit einer dritten Ausführung einer Transportsicherung in unterschiedlichen Ansichten;
- Fig. 4g bis 4i: eine Hängefördervorrichtung mit einer Führungsvorrichtung, einem Transportträger mit einem Tragkörper gemäß der Ausführung in Fig. 4a, 4b und einer Beladestation, mit einer Ablaufsequenz zum Beladen des Transportträgers mit einem Bügel einer Hängeware, in Seitenansicht;
- Fig. 4j: die Hängefördervorrichtung nach Fig. 4g, in Stirnansicht und teilweise geschnitten;
- Fig. 5a: einen Transportträger mit dem Basiskörper und von diesem abgetrennten Tragkörper in einer ersten Konfiguration mit einer vollständig umschlossenen Aufnahmeöffnung, in einer ersten Seitenansicht;
- Fig. 5b: den Transportträger nach Fig. 5a, in einer zweiten Seitenansicht;
- Fig. 6a: den Transportträger nach Fig. 5a, in einer ersten Stirnansicht;
- Fig. 6b: den Transportträger nach Fig. 5a, in einer zweiten Stirnansicht;
- Fig. 7a: einen Transportträger mit dem Basiskörper und von diesem abgetrennten Tragkörper in einer zweiten Konfiguration mit einem Aufhängehaken, in einer ersten Seitenansicht;
- Fig. 7b: den Transportträger nach Fig. 7a, in einer zweiten Seitenansicht;
- Fig. 8a: den Transportträger nach Fig. 5a mit dem Basiskörper und an diesem auswechselbar befestigten Tragkörper, in Stirnansicht;
- Fig. 8b: einen Teilausschnitt des Transportträgers nach Fig. 8a mit dem Tragkörper, in einer vergrößerten Seitenansicht;
- Fig. 8c: eine Schnittdarstellung durch die vordere Seitenwand.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

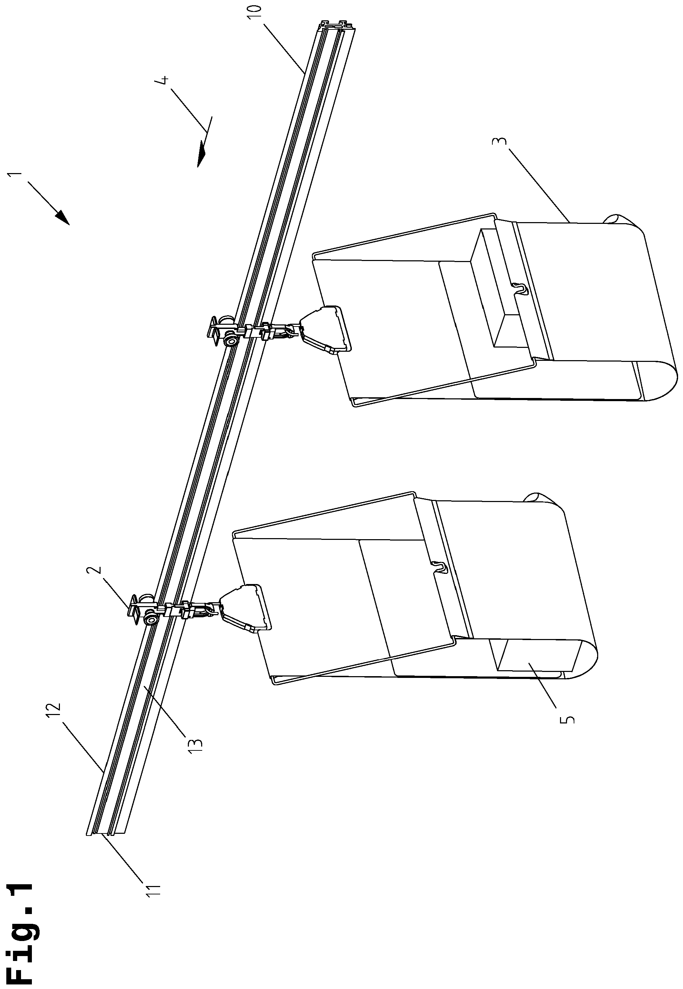

Fig. 1 zeigt einen Abschnitt einer Hängefördervorrichtung 1 mit Transportträgern 2 zum Transport von Hängewaren 3 in einer Transportrichtung 4. Klassische Beispiele von Hängewaren 3 sind Kleidungsstücke, die an Kleiderbügeln hängen, oder Transporttaschen zur Aufnahme von Gegenständen. In Fig. 1 sind die Hängewaren 3 als Transporttaschen dargestellt. Die Hängeware 3 hängt am und unterhalb des Transportträgers 2. Ein Transportträger 2 kann auch mehr als eine Hängeware 3 transportieren. Die Transporttasche kann mit einer Ware 5 beladen werden. Vorzugsweise wird in der Transporttasche ein einzige Ware 5 aufgenommen. Grundsätzlich kann auch mehr als eine Ware 5 in der Transporttasche aufgenommen werden. Die Transporttasche 2 kann verschiedene Waren 5 transportieren, welche in der Geometrie / Abmessung variieren. Die Waren 5 sind beispielweise Kartons, Folienbeutel (so genannte "Polybags") und dgl. Solche Folienbeutel werden vorwiegend in der Textilindustrie verwendet und beispielsweise zur Verpackung von T-Shirts, Hemden und dergleichen eingesetzt.

Die Hängefördervorrichtung 1 umfasst nach der in Fig. 1 gezeigten Ausführung in einem Transportabschnitt eine Führungsvorrichtung 10, eine Antriebsvorrichtung 11 und die mittels der Antriebsvorrichtung 11 entlang der Führungsvorrichtung 10 bewegbaren Transportträger 2. Die Führungsvorrichtung 10 ist beispielweise an einer Profilschiene 12 ausgebildet.

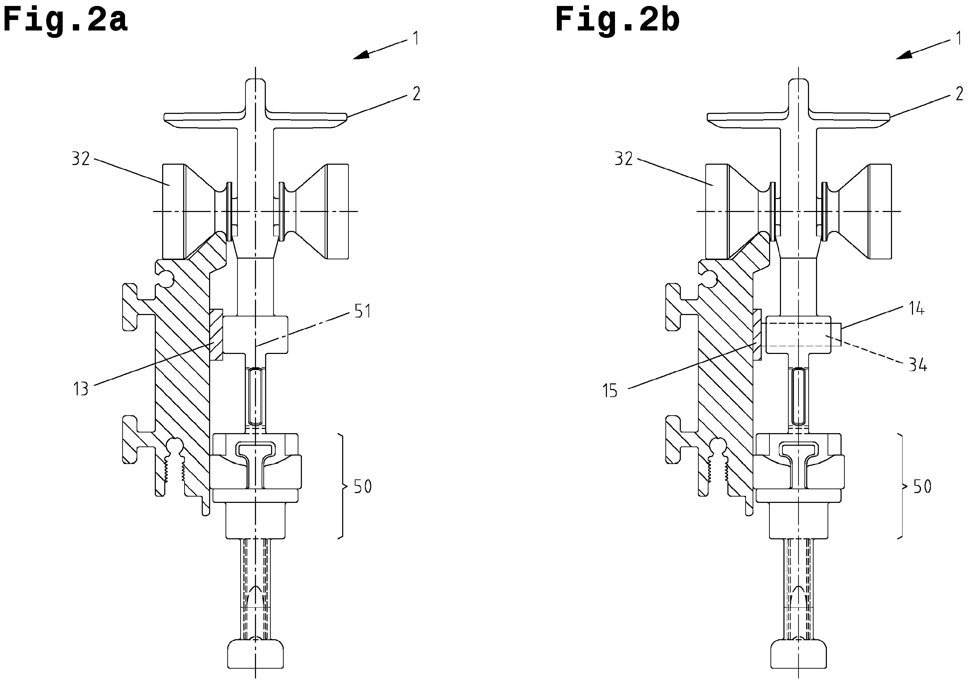

Wie in Fig. 2a, 5a, 5b, 6a, 6b näher dargestellt, werden nach gezeigtem Ausführungsbeispiel die Transportträger 2 durch einen Reibschlussantrieb (Antriebsvorrichtung 11) bewegt. Der Transportträger 2 umfasst einen noch näher zu beschreibenden Basiskörper 30, welcher einen Antriebsabschnitt 31 ausbildet. Der Antriebsabschnitt 31 kann (in diesem Transportabschnitt) mit der Führungsvorrichtung 10 und Antriebsvorrichtung 11 zusammenwirken. Insbesondere umfasst der Antriebsabschnitt 31 eine an einer Achse drehbar gelagerte (erste) Laufrolle 32 und eine Reibfläche 33, letztere mit einem endlos umlaufenden Reibband 13 der Antriebsvorrichtung 11 in Reibverbindung gebracht werden kann. Die in den Fig. gezeigte (zweite) Laufrolle 32 ist optional und dient der Führung des Transportträgers 2 an einer Schaltweiche.

Der Transportträger 2 ist über die (erste) Laufrolle 32 an der Führungsvorrichtung 10 hängend gelagert und kann durch den Reibschlussantrieb in Transportrichtung 4 bewegt werden.

Nach einer in Fig. 2b schematisch gezeigten Ausführung können die Transportträger 2 durch einen Formschlussantrieb (Antriebsvorrichtung 11) bewegt werden. Der Transportträger 2 umfasst einen noch näher zu beschreibenden Basiskörper 30, welcher einen Antriebsabschnitt 31 ausbildet. Der Antriebsabschnitt 31 kann (in diesem Transportabschnitt) mit der Führungsvorrichtung 10 und Antriebsvorrichtung 11 zusammenwirken. Insbesondere umfasst der Antriebsabschnitt 31 eine an einer Achse drehbar gelagerte (erste) Laufrolle 32 und eine Eingriffsfläche 34, letztere kann mit einem von mehreren Mitnehmerelementen 14 an einem endlos umlaufenden Antriebsmittel 15 (Antriebsband, Antriebskette und dergleichen) formschlüssig in Eingriff gelangen. Die in den Fig. gezeigte (zweite) Laufrolle 32 ist optional und dient der Führung des Transportträgers 2 an einer Schaltweiche.

Der Transportträger 2 ist über die (erste) Laufrolle 32 an der Führungsvorrichtung 10 hängend gelagert und kann durch den Formschlussantrieb in Transportrichtung 4 bewegt werden. Eine solche Ausführung ist beispielsweise in der DE 10 2005 006 455 A1 beschrieben.

Auch eine Kombination aus einem Reibschlussantrieb und Formschlussantrieb ist möglich. Eine solche Ausführung ist beispielsweise in der EP 2 121 489 B1 beschrieben.

Die beschriebenen Antriebsvorrichtungen 12 sind keineswegs einschränkend zu verstehen, sondern zeigen lediglich unterschiedliche Möglichkeiten, wie eine Antriebskraft von der Antriebsvorrichtung 11 auf den Antriebsabschnitt 31 des (hängend auf der Führungsvorrichtung 10 gelagerten) Transportträgers 2 übertragen wird, um diesen auf der Führungsvorrichtung 10 in Transportrichtung 4 (angetrieben) zu bewegen.

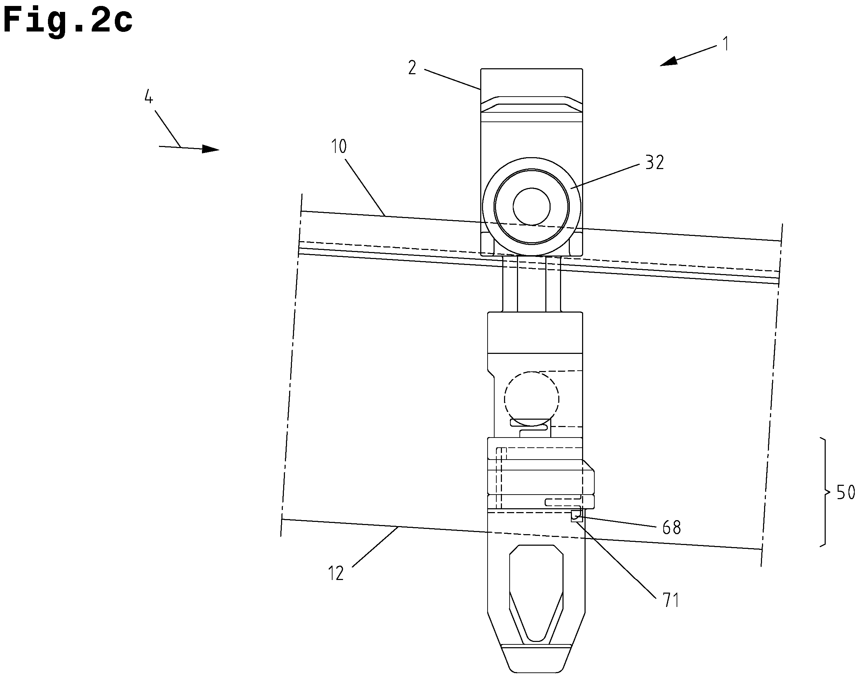

Fig. 2c zeigt die Hängefördervorrichtung 1 in einem Transportabschnitt, in welchem eine Antriebsvorrichtung nicht vorgesehen ist, sondern lediglich die Führungsvorrichtung 10. Die Führungsvorrichtung 10 ist beispielweise an einer geneigt montierten Profilschiene 12 ausgebildet. In diesem Fall werden die (hängend auf der Führungsvorrichtung 10 gelagerten) Transportträger 2 durch Schwerkraft und ohne Antriebsvorrichtung an der Führungsvorrichtung 10 in Transportrichtung 4 (nicht angetrieben) bewegt. Der Antriebsabschnitt 31 kann (in diesem Transportabschnitt) nur mit der Führungsvorrichtung 10 zusammenwirken.

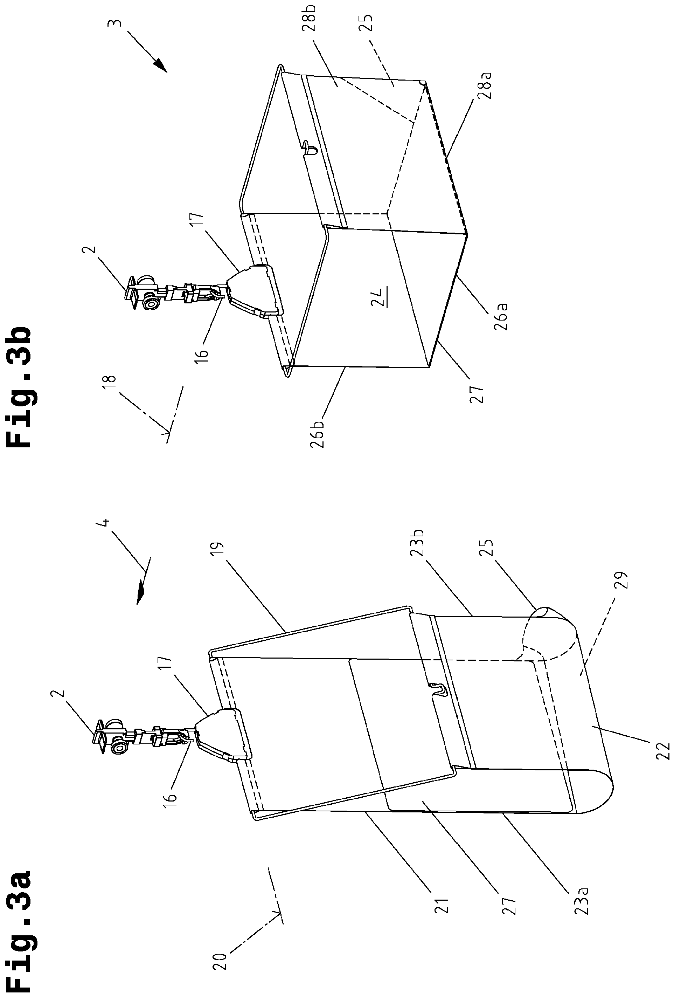

Die Fig. 3a, 3b zeigen eine hängende Transporttasche (auch "Hängetasche" genannt) mit einer möglichen Ausführung eines Taschenkörpers. Fig. 3a zeigt die Transportstellung und Fig. 3b eine Öffnungsstellung, welche die Beladestellung betrifft, wenn die Transporttasche beladen werden soll, oder die Entladestellung, wenn die Transporttasche entladen werden soll. Die Ware 5 ist aus Gründen der besseren Übersicht in diesen Figuren nicht eingetragen. Hinsichtlich der Entladestation zum automatischen Entladen einer Transporttasche und die verschiedenen Ausführungen einer Transporttasche wird die detaillierte Offenbarung in der österreichischen Patentanmeldung AT 520 517 A4 (A50320/2018) und A50059/2019 zum Gegenstand dieser Offenbarung gemacht.

Die Transporttasche umfasst einen Bügel 16, welcher in eine an einem Tragkörper 40a des Transportträgers 2 vorgesehene und vollständig umschlossene Aufnahmeöffnung 54 zum Transport der Hängeware 3 einhängbar ist. Bevorzugt ist der Bügel 16 an einem (optionalen) Hängeträger 16 starr befestigt.

Der Hängeträger 17 und der Transportträger 2 sind über eine Gelenkverbindung gelenkig miteinander gekoppelt. Die Gelenkverbindung ist durch den Tragkörper 40a mit der Aufnahmeöffnung 54 und dem Bügel 16 gebildet.

Es erweist sich nach einer möglichen Ausführung von Vorteil, wenn die Transporttasche an einer automatischen Entladestation entladen wird, wie diese beispielsweise in der österreichischen Patentanmeldung AT 520 517 A4 (A50320/2018) und nachfolgend beschrieben ist. Hierzu kann es insbesondere vorgesehen werden, dass der Hängeträger 17 und der Transportträger 2 über die Gelenkverbindung derart gelenkig miteinander gekoppelt sind, dass der Hängeträger 17 um eine im Wesentlichen parallel zur Führungsvorrichtung 10 (bzw. im Wesentlichen parallel zur Transportrichtung 4) verlaufende Achse 18 und relativ zum Transportträger 2 schwenkbar ist.

Die Transporttasche umfasst nach gezeigter Ausführung ein (optionales) Rahmengestell 19 und einen (optional über das Rahmengestell 19) zwischen einer Transportstellung (Fig. 3a) und einer Belade- oder Endladestellung (Fig. 3b) umstellbaren Taschenkörper.

Das (optionale) Rahmengestell 19 ist am und relativ zum Hängeträger 17 um eine bevorzugt im Wesentlichen horizontal ausgerichtete Achse 20 schwenkbar gelagert.

Der Taschenkörper umfasst
- eine Vorderwand 21 und eine Hinterwand 22,
- einen ersten Seitenrand 23a und einen zweiten Seitenrand 23b entlang der Vorderwand 21 und Hinterwand 22,
- eine an einer ersten Seite des Taschenkörpers zumindest bereichsweise zwischen der Vorder- und Hinterwand 21, 22 ausgebildete Belade- und/oder Endladeöffnung 24,
- einen an einer zweiten Seite des Taschenkörpers zumindest bereichsweise zwischen der Vorder- und Hinterwand 21, 22 ausgebildeten Seitenwandanschlag 25, gegen welche die Ware 5 anlegbar ist, und
- einen Aufbewahrungsraum zur Aufbewahrung der Ware 5 zwischen der Vorder- und Hinterwand 21, 22.

Die Vorderwand 21 und Hinterwand 22 sind in einer bevorzugten Ausführungsform aus einem biegeschlaffen Material, insbesondere aus einer durchgehenden Textilbahn, Folienbahn, ein Geflecht, ein Gewirke, ein Gewebe oder dergleichen zugeschnitten.

Die Vorderwand 21 umfasst einen ersten Vorderwandabschnitt 26a, einen zweiten Vorderwandabschnitt 26b und eine Bodenplatte 27. Die Bodenplatte 27 ist im ersten Vorderwandabschnitt 26a vorgesehen. Insbesondere umfasst der erste Vorderwandabschnitt 26a die Bodenplatte 27 und/oder bildet der erste Vorderwandabschnitt 26a die Bodenplatte 27 aus. Die Bodenplatte 27 ist formstabil und ist bevorzugt quadratisch gestaltet. Grundsätzlich kann diese auch rechteckförmig sein.

Die Hinterwand 22 umfasst einen ersten Hinterwandabschnitt 28a und einen zweiten Hinterwandabschnitt 28b. Der erste Hinterwandabschnitt 28a schließt an den ersten Vorderwandabschnitt 26a an, letzterer mit der Bodenplatte 27 versehen ist. Die Hinterwand 22 ist im ersten Hinterwandabschnitt 28a mit einer niedrigeren Steifigkeit bzw. Formstabilität ausgebildet als im ersten Vorderwandabschnitt 26a. Mit anderen Worten ist der erste Vorderwandabschnitt 26a gegenüber dem ersten Hinterwandabschnitt 28a steifer bzw. formstabiler gestaltet.

Wie in Fig. 3a ersichtlich, sind in der Transportstellung die Vorderwand 21 und Hinterwand 22 aneinander angenähert und wird die (nicht eingetragene) Ware 4 durch die Bodenplatte 27 und den zweiten Hinterwandabschnitt 28b bevorzugt klemmend gehalten. Zusätzlich liegt die Ware 5 auf dem ersten Hinterwandabschnitt 28a auf. Der Taschenkörper bildet in seiner Transportstellung im ersten Hinterwandabschnitt 28a eine sich zwischen dem ersten Seitenrand 23a und zweiten Seitenrand 23b erstreckende Transportauflage 29 aus, welche eine in Richtung des Seitenwandanschlages 25 abfallende (daher geneigt nach unten verlaufende) Transportauflagefläche umfasst. Die Transportauflagefläche grenzt an den Seitenwandanschlag 25 an.

Wie in der Fig. 3b ersichtlich, sind in einer der Öffnungsstellungen des Taschenkörpers, welche die Beladestellung betrifft, wenn die Transporttasche beladen werden soll, oder die Entladestellung, wenn die Transporttasche entladen werden soll, die Vorderwand 21 und Hinterwand 22 voneinander wegbewegt und die Belade- und/oder Endladeöffnung 24 ist durch die Vorderwand 21 und Hinterwand 22 begrenzt und grenzt an die Bodenplatte 27 an. In der Belade- und/oder Endladestellung ist der Aufbewahrungsraum volumenmaximiert. Nach einer bevorzugten Ausführung erfolgt sowohl das Beladen als auch das Entladen der Transporttasche über die Belade- und Entladeöffnung 24. Prinzipiell kann das Beladen auch von oben durch das Rahmengestell 19 hindurch durchgeführt werden. Das Entladen erfolgt jedoch auch nach dieser Ausführung über die Entladeöffnung 24. Das Beladen und/oder Entladen kann automatisch oder manuell durchgeführt werden.

Wie in den Fig. 3a, 3b ersichtlich, ist die Vorderwand 21 mit dem zweiten Vorderwandabschnitt 26b an einer vorderen Querstrebe des Rahmengestelles 19 gelenkig angebracht (erstes Schwenklager) und die Hinterwand 22 mit dem zweiten Hinterwandabschnitt 28b an einer hinteren Querstrebe des Rahmengestelles 19 gelenkig angebracht (zweites Schwenklager).

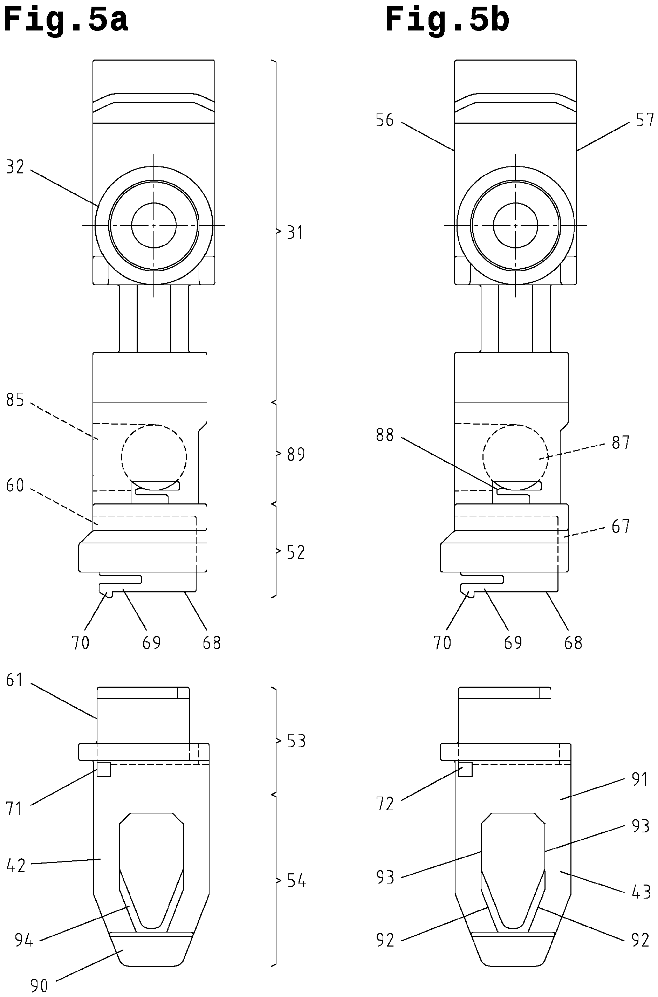

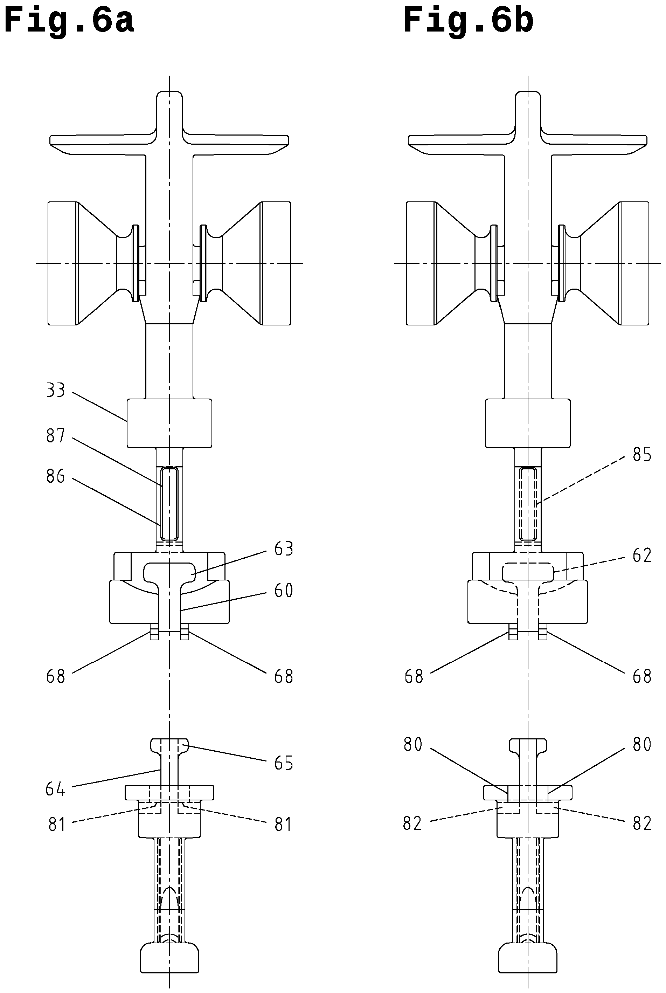

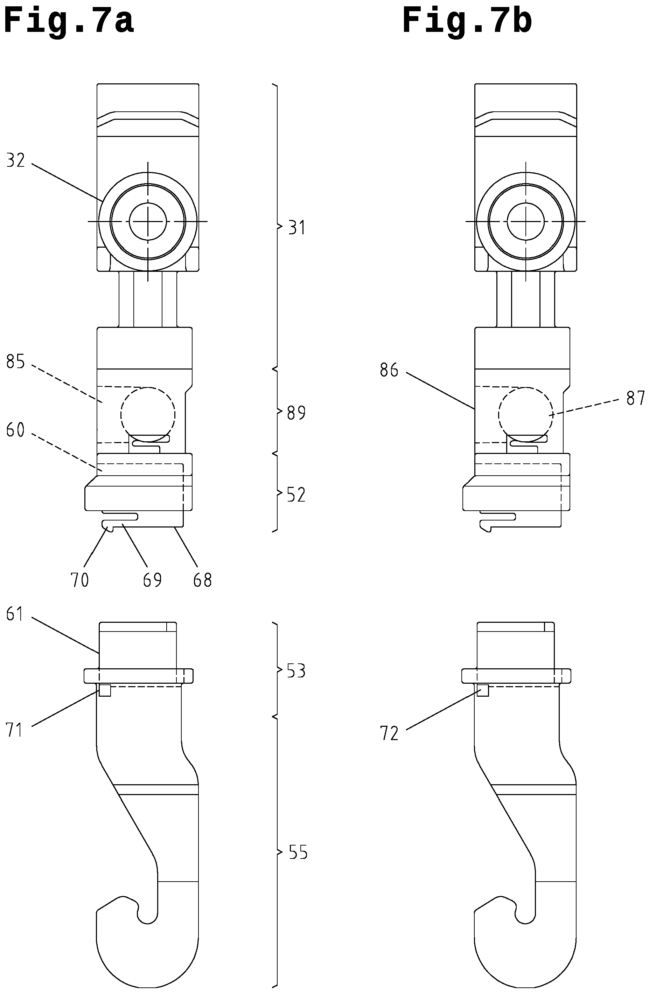

In den Fig. 2a, 2b, 4, 5a, 5b, 6a, 6b (Tragkörper in einer ersten Konfiguration mit einer vollständig umschlossenen Aufnahmeöffnung) und Fig. 7a, 7b (in einer zweiten Konfiguration einen Aufhängehaken) sind unterschiedliche Ansichten eines Transportträgers 2 für eine Hängefördereinrichtung, bevorzugt für die oben beschriebene Hängefördereinrichtung 1 gezeigt, welcher einen Basiskörper 30 und einen über eine Verbindungsvorrichtung 50 auswechselbar befestigten Tragkörper 40a, 40b zum Transport von Hängeware 3 umfasst. Die Fig. 2a, 2b, 2c zeigen dabei den Tragkörper 40a in der am Basiskörper 30 befestigten Betriebsstellung und die Fig. 5a, 5b, 6a, 6b zeigen dabei den Tragkörper 40ba in der vom Basiskörper 30 getrennten Vorbereitungsstellung. Der Transportträger 2 bildet eine Längsachse 51 aus, welche insbesondere vertikal ausgerichtet ist, wenn der Transportträger 2 an der Führungsvorrichtung 10 hängend gelagert ist.

Der Basiskörper 30 ist mit einem Antriebsabschnitt 31, welcher mit der Führungsvorrichtung 10 und/oder der Antriebsvorrichtung 11 der Hängefördervorrichtung 1 zusammenwirken kann, und einem Tragkörperanbindungsabschnitt 52 ausgestattet. Der Tragkörper 40a umfasst einen Basiskörperanbindungsabschnitt 53 und in einer ersten Konfiguration eine vollständig umschlossene Aufnahmeöffnung 54. Der Tragkörper 40b umfasst einen Basiskörperanbindungsabschnitt 53 und in einer zweiten Konfiguration einen Aufhängehaken 55.

Die Verbindungsvorrichtung 50 umfasst in einem der Basis- und Tragkörperanbindungsabschnitte 52, 53 eine senkrecht zur Längsachse 51 verlaufende Profilnut 60 (erstes Formschlusselement) und in einem der Basis- und Tragkörperanbindungsabschnitte 52, 53 einen senkrecht zur Längsachse 51 verlaufenden Profilfortsatz 61 (zweites Formschlusselement).

Nach einer bevorzugten Ausführung ist die Profilnut 60 (erstes Formschlusselement) am Basiskörper 30 im Tragkörperanbindungsabschnitt 52 und ist der Profilfortsatz 61 (zweites Formschlusselement) am Tragkörper 40a, 40b im Basiskörperanbindungsabschnitt 53 angeordnet.

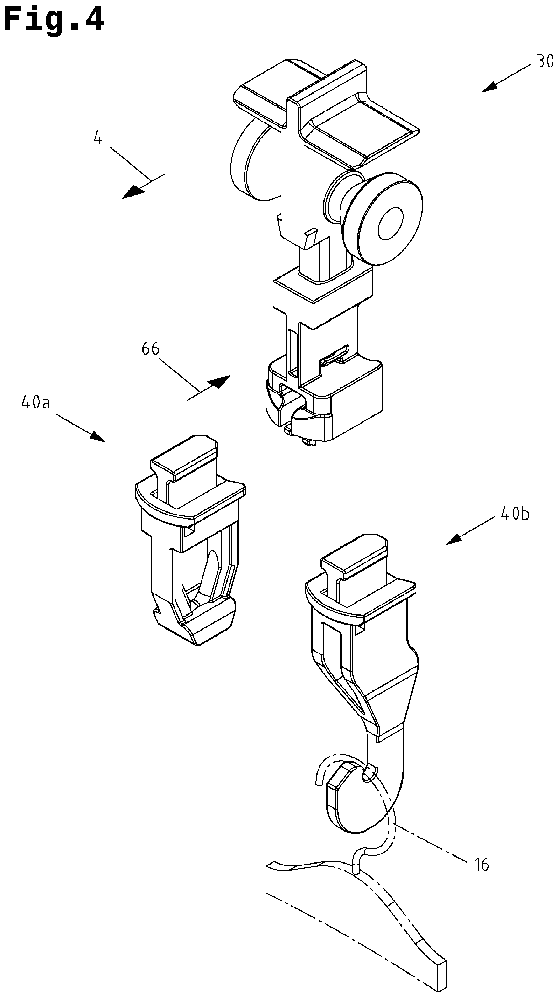

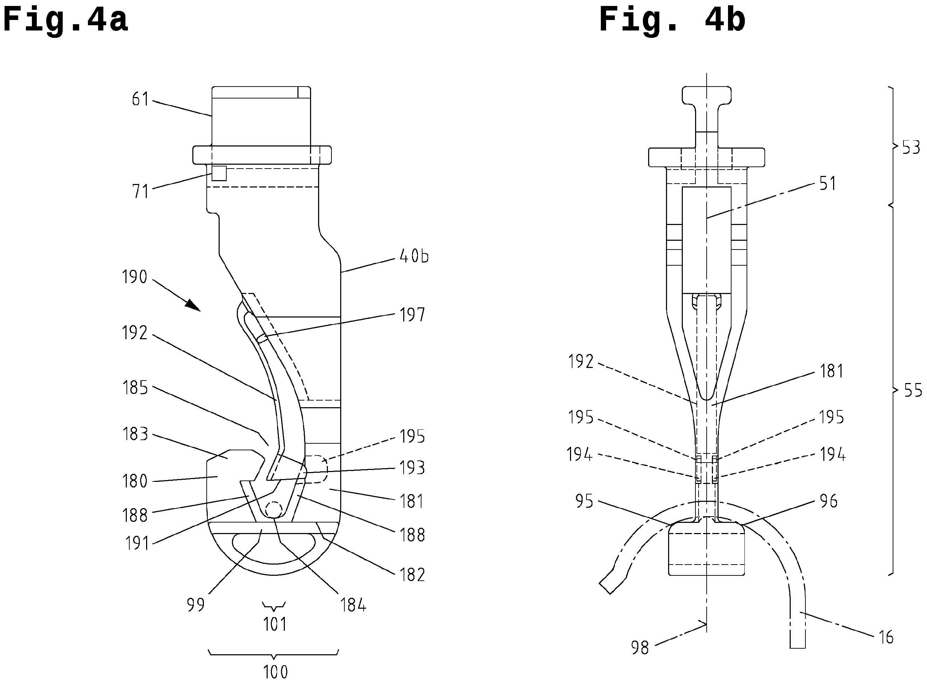

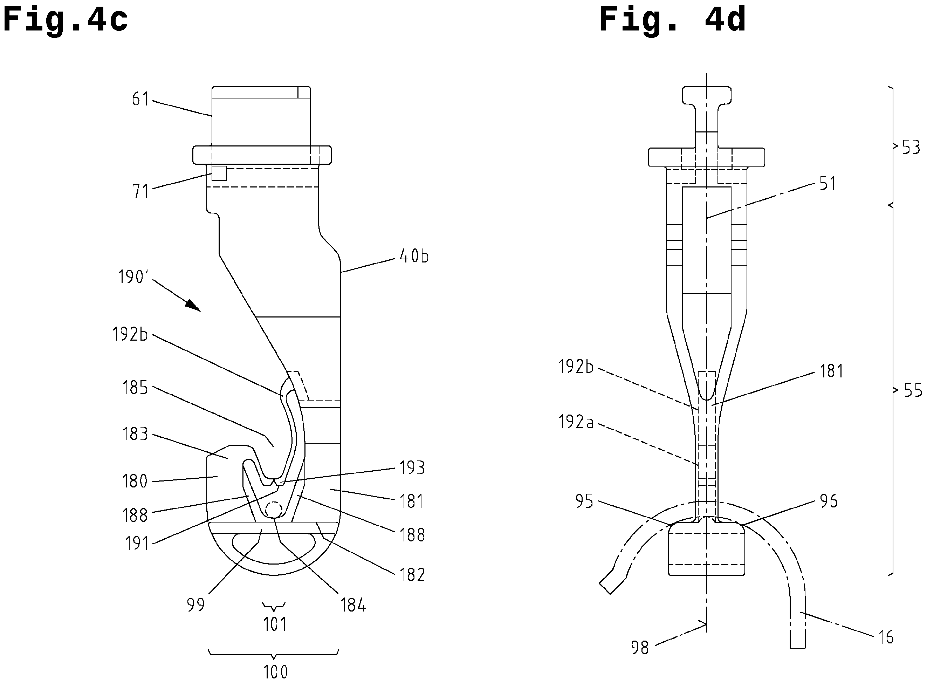

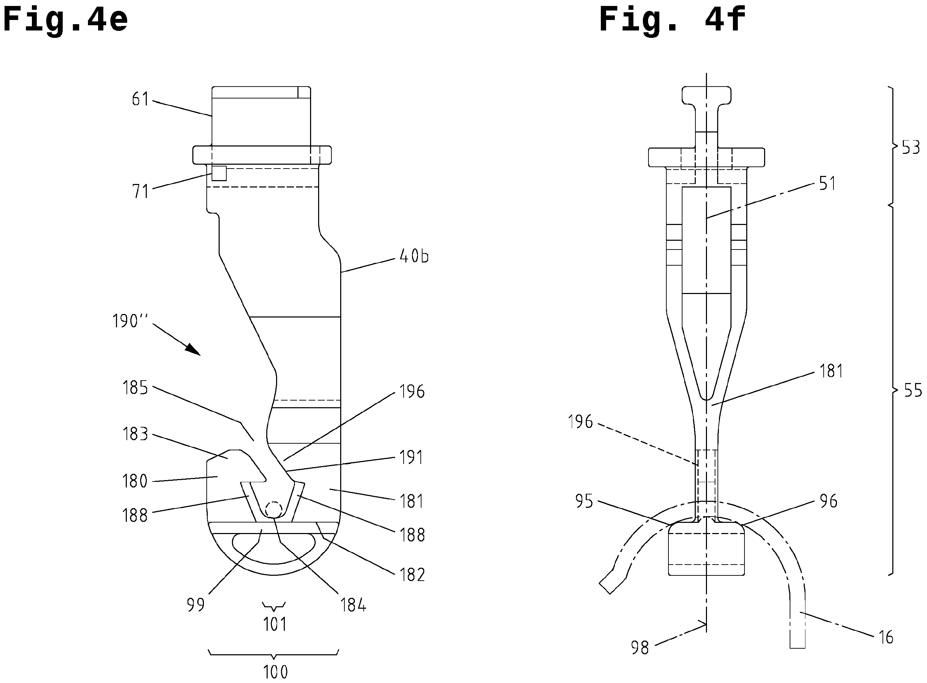

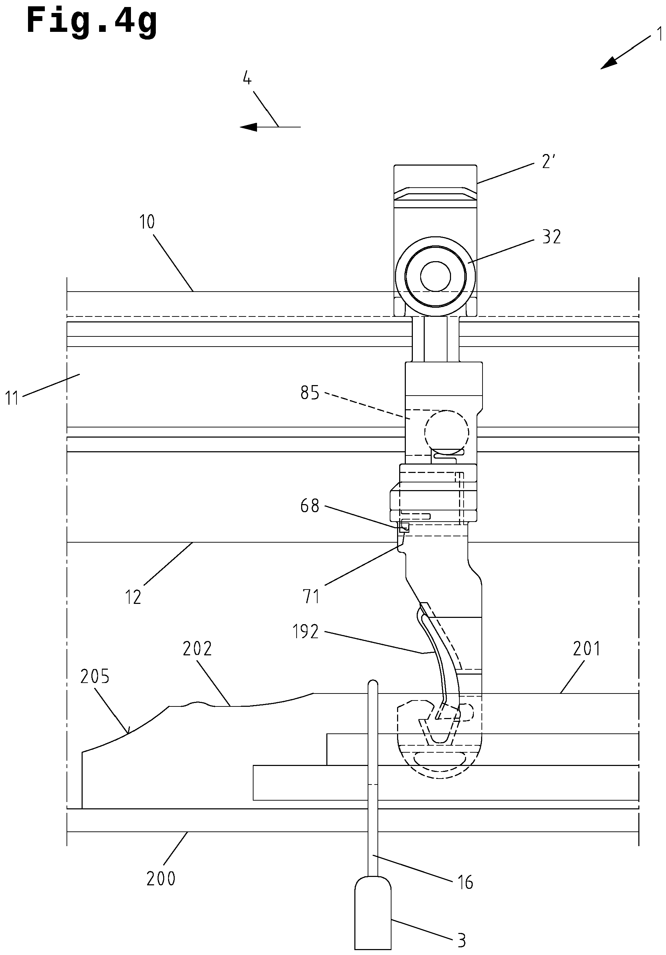

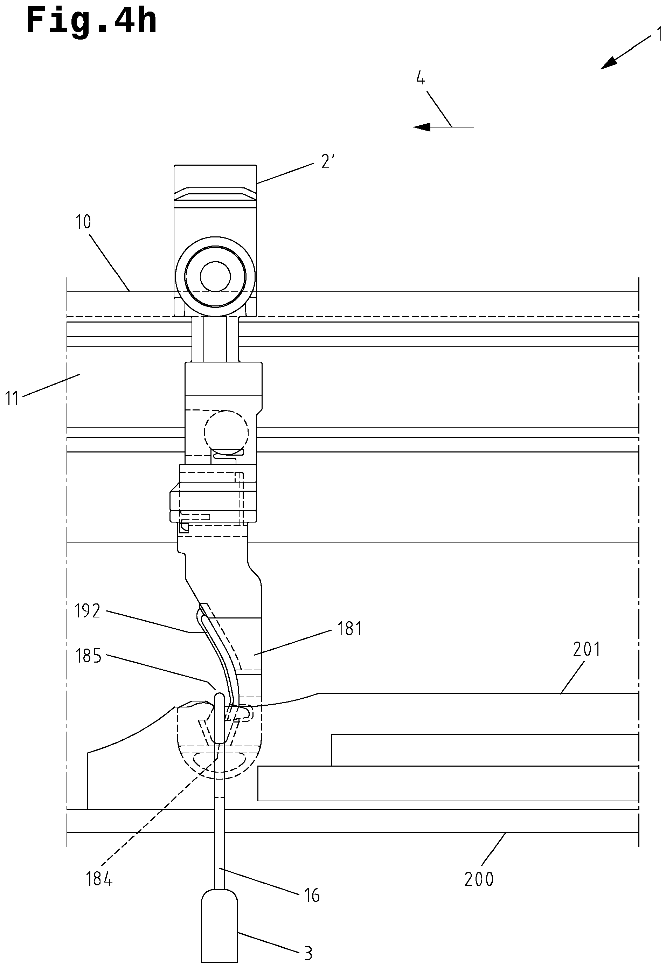

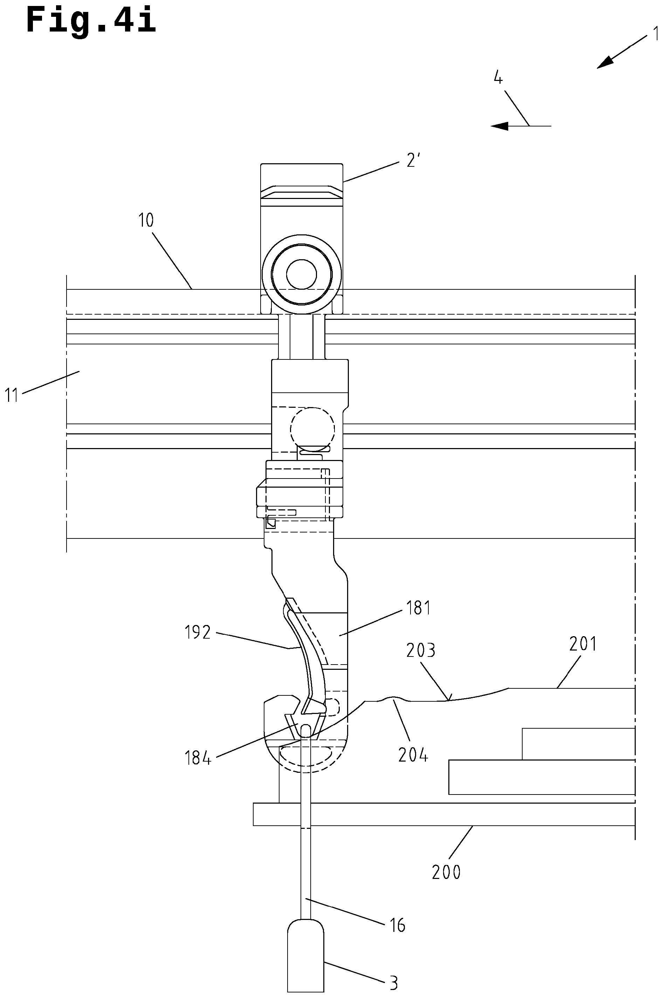

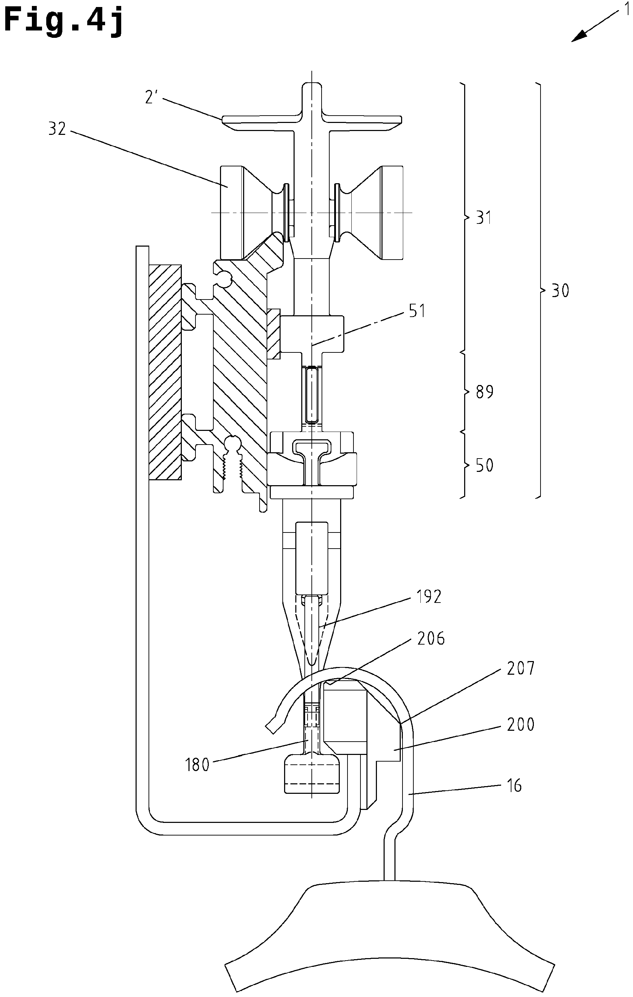

Die Profilnut 60 umfasst eine Hinterschneidung 62, welche in Richtung ihrer Längserstreckung endseitig eine Einschuböffnung 63 ausbildet. Der Profilfortsatz 61 umfasst einen Profilsteg 64 und einen am Profilsteg 64 querschnittserweiternd angeformten Profilkopf 65. Der Profilfortsatz 61 ist über die Einschuböffnung 63 in einer senkrecht zur Längsachse 51 ausgerichteten Einschubrichtung 66 (Fig. 4) in die Profilnut 60 einschiebbar.

Die hinterschnittene Profilnut 60 und der Profilfortsatz 61 sind in einer bevorzugten Ausführung im Querschnitt im Wesentlichen T-förmig gestaltet.

Wie ausschließlich in Fig. 5b eingetragen, umfasst der Transportträger 2 eine Vorderwand 56 und eine Rückwand 57. Die hinterschnittene Profilnut 60 ist durch eine sich von der Vorderwand 56 in Richtung der Rückwand 57 erstreckende Profilnut gebildet. Die Profilnut endet vor der Rückwand 57, sodass ein Materialsteg 67 verbleibt.

Die hinterschnittene Profilnut 60 kann zusätzlich durch eine zum Tragkörper 40a, 40b und über ihre Längserstreckung durchgehend geöffnete Profilnut gebildet sein.

Nach einer bevorzugten Ausführung umfasst die Verbindungsvorrichtung 50 gegenseitig in Eingriff bringbare Verriegelungselemente 68, 71, welche derart angeordnet und ausgebildet sind, dass der Basiskörper 30 und Tragkörper 40a, 40b in Längsrichtung der Profilnut 60 gegenseitig verschiebefest arretiert sind, wenn der auswechselbare Tragkörper 40a, 40b am Basiskörper 30 angebracht ist, wie ausschließlich in Fig. 2c ersichtlich.

Die Verriegelungselemente umfassen erste Verriegelungselemente 68, welche in einem der Basis- und Tragkörperanbindungsabschnitte 52, 53 zu beiden Seiten der Profilnut 60 angeordnete elastisch nachgiebige Federarme mit jeweils an einem Federbügel 69 angeformter Rastnase 70 gebildet sind. Die Verriegelungselemente umfassen zweite Verriegelungselemente 71, welche in einem der Basis- und Tragkörperanbindungsabschnitte 52, 53 zu beiden Seiten des Profilsteges 64 angeordnete Rastöffnungen 72 gebildet sind.

Nach einer bevorzugten Ausführung sind die ersten Verriegelungselemente 68 (Federarme mit Rastnasen 70) am Basiskörper 30 im Tragkörperanbindungsabschnitt 52 und die zweiten Verriegelungselemente (Rastöffnungen 72) am Tragkörper 40a, 40b im Basiskörperanbindungsabschnitt 53 angeordnet.

Nach einer bevorzugten Ausführung umfasst die Verbindungsvorrichtung 50 in einem der Basis- und Tragkörperanbindungsabschnitte 52, 53 zu beiden Seiten des Profilsteges 64 angeordnete Aufnahmeschlitze 80, welche jeweils eine in Einschubrichtung 66 des Tragkörpers 40a, 40b verlaufende Stützflächen 81 und eine in einem in Einschubrichtung 66 des Tragkörpers 40a, 40b hinterem Endbereich angeordnete Rastöffnung 72 ausbilden.

Wird der Tragkörper 40a, 40b relativ zum Basiskörper 30 in Einschubrichtung 66 senkrecht zur Längsachse 51 bewegt, werden die Federarme durch die und an den Stützflächen 81 (gleitend) aufliegenden Rastnasen 70 beispielsweise nach innen gebogen und entspannen sich nach außen, sobald die Rastnasen 70 die Umrandung der Rastöffnungen 72 passiert haben. Die Umrandung der Rastöffnungen 72 wird von beispielsweise sägezahnähnlichen Rastnasen 70 formschlüssig hintergriffen.

Die formschlüssige Verbindung kann aufgehoben werden, indem die Federarme in einer senkrecht zu ihrer Haupterstreckungsrichtung verlaufenden Biegerichtung derart ausgelenkt werden, dass die Rastnasen 70 wieder außer Eingriff mit der Umrandung der Rastöffnungen 72 gebracht werden. Gleichzeitig wird der Tragkörper 40a, 40b entgegen der Einschubrichtung 66 in senkrechter Richtung zur Längsachse 51 bewegt.

Die Verbindungsvorrichtung kann hierzu Zugangskanäle 82 aufweisen, in welche die Rastöffnungen 72 münden. Vorzugsweise kann ein Werkzeug in die Zugangskanäle 82 eingeführt und es können mit diesem die Rastnasen 70 aus den Rastöffnungen 72 herausgehebelt werden.

Wie beispielweise in den Fig. 6a, 6b, 7a, 7b eingetragen, kann der Basiskörper 30 einen senkrecht zur Längsachse 51 verlaufenden Aufnahmeschacht 85 mit einem in Richtung seiner Längserstreckung endseitig ausgebildeten Öffnungsschlitz 86 und ein über den Öffnungsschlitz 86 in den Aufnahmeschacht 85 einsteckbares Identifikationsmittel 87 umfassen. Das Identifikationsmittel 87 ist vorzugsweise als RFID-Transponder gestaltet.

Insbesondere umfasst der Aufnahmeschacht 85 einen zum Tragkörperanbindungsabschnitt 52 geöffneten Boden und einen in Richtung zum Boden vorragenden elastisch nachgiebigen Federarm 88 mit einer Auflagefläche. Der in den Aufnahmeschacht 85 eingeschobene RFID-Transponder stützt sich an der Auflagefläche ab und wird durch den Federarm 88 gehalten.

Der Aufnahmeschacht 85 und das Identifikationsmittel 87 sind in einem Transportträgeridentifikationsabschnitt 89 zwischen dem Antriebsabschnitt 31 und dem Tragkörperanbindungsabschnitt 52 angeordnet.

Die Fig. 4 zeigt ein Transportträgersystem für eine Hängefördervorrichtung, bevorzugt für die oben beschriebene Hängefördereinrichtung 1. Das Transportträgersystem umfasst
- einen ersten Tragkörper 40a in einer ersten Konfiguration mit einem Basiskörperanbindungsabschnitt 53 und einer vollständig umschlossenen Aufnahmeöffnung 54 zum Transport von Hängeware 3,
- einen zweiten Tragkörper 40b in einer zweiten Konfiguration mit einem Basiskörperanbindungsabschnitt 53 und einem Aufhängehaken 55 zum Transport von Hängeware 3, und
- einen universell verwendbaren Basiskörper 30 mit einem Antriebsabschnitt 31, welcher mit einer Führungsvorrichtung 10 und/oder einer Antriebsvorrichtung 11 der Hängefördervorrichtung 1 zusammenwirken kann, und einem Tragkörperanbindungsabschnitt 52.

Der erste Tragkörper 40a oder der zweite Tragkörper 40b in der zweiten Konfiguration ist über die oben beschriebene Verbindungsvorrichtung 50 auswechselbar am Basiskörper 30 befestigbar, um wahlweise einen Transportträger 2 in einer ersten Konfiguration mit einer vollständig umschlossenen Aufnahmeöffnung 54 zum Transport von Hängeware 3 oder einen Transportträger 2 in einer zweiten Konfiguration mit einem Aufhängehaken 55 zum Transport von Hängeware 3 zu bilden. Der Transportträger 2 in der ersten Konfiguration dient bevorzugt dem Transport einer Transporttasche, dessen Bügel 16 in die Aufnahmeöffnung 54 eingehängt wird (siehe beispielwiese Fig. 3a). Der Transportträger 2 in der zweiten Konfiguration dient bevorzugt dem Transport eines Kleidungsstückes auf Kleiderbügel, wobei der Bügel 16 des Kleiderbügels auf dem Aufhängehaken 55 eingehängt wird (siehe Fig. 4 in strichpunktierte Linien abschnittsweise dargestellt).

Unabhängig davon, welche Konfiguration die Tragkörper 40a, 40b aufweisen, sind diese stets mit dem baugleichen bzw. identischen Basiskörperanbindungsabschnitt 53 versehen.

Der erste Tragkörper 40a ist in den Fig. 5a, 5b näher dargestellt. Dieser umfasst in einer vereinfachten Ausführung
eine im Wesentlichen parallel zur Längsachse 51 verlaufende vordere Seitenwand 42,
eine im Wesentlichen parallel zur Längsachse 51 verlaufende hintere Seitenwand 43,
eine zwischen der vorderen Seitenwand 42 und hinteren Seitenwand 43 verlaufende untere Seitenwand 90, und
eine zwischen der vorderen Seitenwand 42 und hinteren Seitenwand 43 verlaufende obere Seitenwand 91.

Die Aufnahmeöffnung 54 zum Einhängen eines Bügels 16 der Hängeware 3 ist durch die Seitenwände 42, 43, 90, 91 vollständig umschlossen. Die vordere Seitenwand 42 und hintere Seitenwand 43 weisen jeweils einen unteren Wandabschnitt 92 und einen oberen Wandabschnitt 93 auf. Die unteren Wandabschnitte 92 sind mit in Richtung zur unteren Seitenwand 90 geneigt aufeinander zulaufenden Führungsrändern 94 versehen und münden in die untere Seitenwand 90. Der erste Tragkörper 40a kann optional an der unteren Seitenwand 90 einen ersten Auflageabschnitt 95 und einen zweiten Auflageabschnitt 96 umfassen, wie nachfolgend beschrieben.

In den nachfolgend beschriebenen Fig. 4a, 4b, 4c, 4d, 4e, 4f ist ein Tragkörper 40b für einen Transportträger 2' mit unterschiedlichen Ausführungen einer Transportsicherung 190, 190', 190" beschrieben. Die Fig. 4g bis 4j zeigen eine Hängefördervorrichtung 1 mit einer Führungsvorrichtung 10 und einer Antriebsvorrichtung 11 zum reibschlüssigen Antrieb der Transportträger 2'. Wie oben beschrieben kann alternativ die Antriebsvorrichtung zum formschlüssigen Antrieb der Transportträger 2' ausgebildet sein. Möglich ist auch, dass die Hängefördervorrichtung 1 eine Führungsvorrichtung 10 umfasst, jedoch keine Antriebsvorrichtung 11.

Es sei an dieser Stelle hingewiesen, dass in den Fig. 4a-4j jene Ausführung gezeigt ist, wonach der Transportträger 2' den oben beschriebenen Basiskörper 30 und den über eine Verbindungsvorrichtung 50 auswechselbar befestigten Tragkörper 40b zum Transport von Hängeware 3 umfasst.

Dem gegenüber kann der Basiskörper 30 und der Tragkörper 40b auch dauerhaft miteinander verbunden werden. Daher entfällt die Verbindungsvorrichtung 50, wie dies jedoch in diesen Figuren nicht dargestellt ist.

Nach dieser Ausführung umfasst der Transportträger 2' zum Transport von Hängeware 3 an der Hängefördervorrichtung 1
- die vertikale Längsachse 51, welche insbesondere vertikal ausgerichtet ist, wenn der Transportträger 2' an der Führungsvorrichtung 10 hängend gelagert ist,
- den Basiskörper 30 mit dem Antriebsabschnitt 31, welcher mit der Führungsvorrichtung 10 und/oder einer Antriebsvorrichtung 11 der Hängefördervorrichtung 1 zusammenwirken kann,
- den Tragkörper 40b mit
   einer im Wesentlichen parallel zur Längsachse 51 verlaufenden vorderen Seitenwand 180,
   einer im Wesentlichen parallel zur Längsachse 51 verlaufenden hinteren Seitenwand 181,
   einer zwischen der vorderen Seitenwand 180 und hinteren Seitenwand 181 verlaufenden unteren Seitenwand 182,
   einer sich zwischen der vorderen Seitenwand 180 und hinteren Seitenwand 181 erstreckenden oberen Seitenwand 183, und
   einem durch die vordere Seitenwand 180, hintere Seitenwand 181 und untere Seitenwand 182 gebildeten Aufnahmeabschnitt 184 zum Aufhängen des Bügels 16 der Hängeware 3,
   einem in den Aufnahmeabschnitt 184 mündenden Zugangskanal 185, über welchen der Bügel 16 der Hängeware 3 in den Aufnahmeabschnitt 184 eingeführt wird.

Die vordere Seitenwand 180 und hintere Seitenwand 181 weisen jeweils einen unteren Wandabschnitt auf. Die unteren Wandabschnitte sind mit in Richtung zur unteren Seitenwand 182 geneigt aufeinander zulaufenden Führungsrändern 188 versehen und münden in die untere Seitenwand 182.

Nach einer vorteilhaften ersten Ausführung umfasst die untere Seitenwand 182 den ersten Auflageabschnitt 95 und den zweiten Auflageabschnitt 96, welche zu beiden Seiten der zwischen der vorderen Seitenwand 180 und hinteren Seitenwand 181 aufgespannten Mittelebene 98 und jeweils mit Abstand zur Mittelebene 98 versetzt angeordnet sind, sodass der Bügel 16 zwischen den Führungsrändern 188 positioniert und auf dem ersten Auflageabschnitt 95 und zweiten Auflageabschnitt 96 abstützbar ist.

Nach einer vorteilhaften zweiten Ausführung umfasst der Tragkörper 40b zusätzlich eine Transportsicherung 190, welche mit einem Vertikalabstand oberhalb des Aufnahmeabschnitts 184 angeordnet ist und eine Anschlagfläche 191 ausbildet, welche Anschlagfläche 191 eine Relativverlagerung des Bügels 16 in Richtung zur Transportsicherung 190 begrenzt oder erschwert.

Nach der zweiten Ausführung (welche den Gegenstand einer eigenständigen Anmeldung bilden kann) umfasst der Transportträger 2' zum Transport von Hängeware 3 an der Hängefördervorrichtung 1
- die vertikale Längsachse 51 (welche insbesondere vertikal ausgerichtet ist, wenn der Transportträger 2' an der Führungsvorrichtung 10 hängend gelagert ist),
- den Basiskörper 30 mit dem Antriebsabschnitt 31, welcher mit der Führungsvorrichtung 10 und/oder einer Antriebsvorrichtung 11 der Hängefördervorrichtung 1 zusammenwirken kann,
- den Tragkörper 40b mit
   einer im Wesentlichen parallel zur Längsachse 51 verlaufenden vorderen Seitenwand 180,
   einer im Wesentlichen parallel zur Längsachse 51 verlaufenden hinteren Seitenwand 181,
   einer zwischen der vorderen Seitenwand 180 und hinteren Seitenwand 181 verlaufenden unteren Seitenwand 182,
   einer sich zwischen der vorderen Seitenwand 180 und hinteren Seitenwand 181 erstreckenden oberen Seitenwand 183, und
   einem durch die vordere Seitenwand 180, hintere Seitenwand 181 und untere Seitenwand 182 gebildeten Aufnahmeabschnitt 184 zum Aufhängen des Bügels 16 der Hängeware 3,
   einem in den Aufnahmeabschnitt 184 mündenden Zugangskanal 185, über welchen der Bügel 16 der Hängeware 3 in den Aufnahmeabschnitt 184 eingeführt wird,
   einer Transportsicherung 190, welche mit einem Vertikalabstand oberhalb des Aufnahmeabschnitts 184 angeordnet ist und eine Anschlagfläche 191 ausbildet, welche Anschlagfläche 191 eine Relativverlagerung des Bügels 16 in Richtung zur Transportsicherung 190 begrenzt oder erschwert.

Demnach kann der Transportträger 2' auch eine untere Seitenwand 182 ausbilden, welche keinen zusätzlichen ersten Auflageabschnitt 95 und zweiten Auflageabschnitt 96 umfasst.

Eine vorteilhafte dritte Ausführung resultiert aus der Kombination der ersten Ausführung und zweiten Ausführung.

Nach der dritten Ausführung (welche den Gegenstand einer eigenständigen Anmeldung bilden kann) umfasst der Transportträger 2' zum Transport von Hängeware 3 an der Hängefördervorrichtung 1
- die vertikale Längsachse 51 (welche insbesondere vertikal ausgerichtet ist, wenn der Transportträger 2' an der Führungsvorrichtung 10 hängend gelagert ist),
- den Basiskörper 30 mit dem Antriebsabschnitt 31, welcher mit der Führungsvorrichtung 10 und/oder einer Antriebsvorrichtung 11 der Hängefördervorrichtung 1 zusammenwirken kann,
- den Tragkörper 40b mit
   einer im Wesentlichen parallel zur Längsachse 51 verlaufenden vorderen Seitenwand 180,
   einer im Wesentlichen parallel zur Längsachse 51 verlaufenden hinteren Seitenwand 181,
   einer zwischen der vorderen Seitenwand 180 und hinteren Seitenwand 181 verlaufenden unteren Seitenwand 182,
   einer sich zwischen der vorderen Seitenwand 180 und hinteren Seitenwand 181 erstreckenden oberen Seitenwand 183, und
   einem durch die vordere Seitenwand 180, hintere Seitenwand 181 und untere Seitenwand 182 gebildeten Aufnahmeabschnitt 184 zum Aufhängen des Bügels 16 der Hängeware 3,
   einem in den Aufnahmeabschnitt 184 mündenden Zugangskanal 185, über welchen der Bügel 16 der Hängeware 3 in den Aufnahmeabschnitt 184 eingeführt wird,
   einer Transportsicherung 190, welche mit einem Vertikalabstand oberhalb des Aufnahmeabschnitts 184 angeordnet ist und eine Anschlagfläche 191 ausbildet, welche Anschlagfläche 191 eine Relativverlagerung des Bügels 16 in Richtung zur Transportsicherung 190 begrenzt oder erschwert,
- wobei die untere Seitenwand 182 den ersten Auflageabschnitt 95 und den zweiten Auflageabschnitt 96, welche zu beiden Seiten der zwischen der vorderen Seitenwand 180 und hinteren Seitenwand 181 aufgespannten Mittelebene 98 und jeweils mit Abstand zur Mittelebene 98 versetzt angeordnet sind, sodass der Bügel 16 zwischen den Führungsrändern 188 positioniert und auf dem ersten Auflageabschnitt 95 und zweiten Auflageabschnitt 96 abstützbar ist.

Wie bereits oben ausführlich beschrieben und gleichermaßen auf die in den Fig. 4a, 4b, 4c, 4d, 4e, 4f beschriebenen Ausführungen zu übertragen, schließen die Führungsränder 188 einen Öffnungswinkel (α) von weniger als 90° ein. Auch ist es von Vorteil, wenn die Führungsränder 188 jeweils eine gerundete Führungsfläche ausbilden. Nach einer möglichen Ausführung umfasst der erste Auflageabschnitt 95 und zweite Auflageabschnitt 96 parallel zueinander verlaufende Kanten 99, deren Mindestlänge 100 größer ist als eine minimale Öffnungsweite 101 zwischen den Führungsrändern 188. Die Kanten 99 können jeweils eine gerundete Auflagefläche ausbilden.

Die Fig. 4a und 4b zeigen eine erste Ausführung der Transportsicherung 190, welche einen an der hinteren Seitenwand 181 angeordneten, elastisch nachgiebigen Federarm mit einem Federbügel 192 und einem am vorragenden Ende angeordneten Anschlag 193 aufweist, wobei der Anschlag 193 in den Zugangskanal 185 vorragt und an seiner dem Aufnahmeabschnitt 184 zugewandten Seitenwand die Anschlagfläche 191 ausbildet. In Fig. 4a befindet sich der Federbügel 192 in einer (nicht ausgelenkten) Sperrstellung, wo die Anschlagfläche 191 eine Relativverlagerung des Bügels 16 in Richtung zur Transportsicherung 190 begrenzt. Außerdem ist in der Sperrstellung des Federbügels 192 der Zugangskanal 185 durch den Anschlag 193 im Querschnitt soweit verengt, dass ein schematisch eingetragener Bügel 16 in den Zugangskanal 185 nicht eintreten kann.

Auch wenn dies in den Fig. 4a, 4b, 4g und 4i nicht dargestellt ist, ist es grundsätzlich auch möglich, dass der Federbügel 192 mit seinem vorragenden Ende gegen die vordere Seitenwand 180 und/oder obere Seitenwand 183 anliegen kann, wenn sich der Federbügel 192 in der Sperrstellung befindet.

In der (ausgelenkten) Freigabestellung des Federbügels 192 ist der Zugangskanal 185 im Querschnitt soweit ausgeweitet, dass ein schematisch eingetragener Bügel 16 über den Zugangskanal 185 auf den Aufnahmeabschnitt 184 zugeführt werden kann, wie in Fig. 4h ersichtlich.

Es kann sich auch von Vorteil erweisen, wenn sich der Federbügel 192 im hinteren Endbereich an einem Lagerpunkt 197 abstützt. Der Lagerpunkt 197 kann am Federbügel 192 ausgebildet sein, sodass der Lagerpunkt 197 gegen die hintere Seitenwand 181 anliegt / anliegen kann, insbesondere wenn sich der Federbügel 192 in einer (nicht ausgelenkten) Sperrstellung befindet. Der Lagerpunkt 197 kann alternativ an der hinteren Seitenwand 181 ausgebildet sein, sodass der Lagerpunkt 197 gegen den Federbügel 192 anliegt / anliegen kann, insbesondere wenn sich der Federbügel 192 in einer (nicht ausgelenkten) Sperrstellung befindet. Es kann auch vorgesehen sein, dass der Tragkörper 42b mit einem nicht dargestellten Zusatzgewicht ausgestattet wird, welches an der hinteren Seitenwand 181 angeordnet wird. Das Zusatzgewicht kann ebenso diesen Lagerpunkt 197 ausbilden. Es sei hingewiesen, dass der Lagerpunkt 197 aus Gründen der besseren Übersicht ausschließlich in Fig. 4a und schematisch eingetragen ist.

Wie in den Fig. 4a und 4b ersichtlich, umfassen die hintere Seitenwand 181 und der Federbügel 192 miteinander in Eingriff bringbare Führungselemente 194, 195.

Konkret kann der Federbügel 192 mit einem ersten Führungselement 194 und einem zweiten Führungselement 194 versehen werden. Vorzugsweise ragen das erste Führungselement 194 und zweite Führungselement 194 vom Federbügel 192 in Richtung zur hinteren Seitenwand 181 vor. Das erste Führungselement und zweite Führungselement sind vorzugsweise beidseitig am Federbügel 192 und quer zu einer Längsachse des Federbügels 192 gegenüberliegend angeordnet, wie in Fig. 4b ersichtlich. Das erste Führungselement 194 und zweite Führungselement 194 können aber auch beidseitig am Federbügel 192 und in Richtung zu einer Längsachse des Federbügels 192 zueinander versetzt angeordnet sein. Das erste Führungselement 194 und zweite Führungselement 194 können nach einer möglichen Ausführung im vorderen Endbereich des Federbügels 192 angeordnet werden und erstrecken sich maximal über ein Drittel der Länge des Federbügels 192. Das erste Führungselement 194 und zweite Führungselement 194 bilden konkret Führungsvorsprünge.

Die hintere Seitenwand 181 ist nach gezeigter Ausführung mit einem ersten Führungselement 195 und einem zweiten Führungselement 195 versehen. Das erste Führungselement 194 vom Federbügel 192 und das erste Führungselement 195 von der hinteren Seitenwand 181 sind komplementär ausgebildet. Ebenso sind das zweite Führungselement 194 vom Federbügel 192 und das zweite Führungselement 195 von der hinteren Seitenwand 181 komplementär ausgebildet. Sind das erste / zweite Führungselement 194 des Federbügels 192 durch Führungsvorsprünge gebildet, sind das erste / zweite Führungselement 195 der hinteren Seitenwand 181 durch Führungsvertiefungen gebildet.

Die Fig. 4c und 4d zeigen eine zweite Ausführung der Transportsicherung 190', welche einen an der vorderen Seitenwand 180 angeordneten, elastisch nachgiebigen ersten Federarm mit einem Federbügel 192a und einem am vorragenden Ende angeordneten Anschlag 193 und einen an der hinteren Seitenwand 181 angeordneten, elastisch nachgiebigen zweiten Federarm mit einem Federbügel 192b und einem am vorragenden Ende angeordneten Anschlag 193 aufweist, wobei die Anschläge 193 jeweils in den Zugangskanal 185 vorragen und an einer dem Aufnahmeabschnitt 184 zugewandten Seitenwand die Anschlagflächen 191 ausbilden. In Fig. 4c befinden sich die Federbügel 192a, 192b jeweils in einer (nicht ausgelenkten) Sperrstellung, wo die Anschlagflächen 191 eine Relativverlagerung des Bügels 16 in Richtung zur Transportsicherung 190 begrenzen können. In der Sperrstellung der Federbügel 192a, 192b ist der Zugangskanal 185 durch die Anschläge 193 im Querschnitt soweit verengt, dass ein schematisch eingetragener Bügel 16 in den Zugangskanal 185 nicht eintreten kann. Wie nicht näher dargestellt können die Federbügel 192a, 192b jeweils in eine (ausgelenkte) Freigabestellung bewegt werden, wobei in den Freigabestellungen der Federbügel 192a, 192b der Zugangskanal 185 im Querschnitt soweit ausgeweitet ist, dass ein schematisch eingetragener Bügel 16 über den Zugangskanal 185 auf den Aufnahmeabschnitt 184 zugeführt werden kann.

Die Fig. 4e und 4f zeigen eine dritte Ausführung der Transportsicherung 190", welche eine an der hinteren Seitenwand 181 angeordnete Erhebung 196 umfasst, welche in den Zugangskanal 185 vorragt und die Anschlagfläche 191 ausbildet. Die Erhebung 196 ist im Wesentlich starr ausgebildet und bildet im Zugangskanal 185 eine "Störkontur", welche eine Relativverlagerung des Bügels 16 in Richtung zur Transportsicherung 190 erschwert. Dadurch kann einerseits ein "Hochsteigen" des Bügels 16 an einem Führungsrand 188 in begrenztem Ausmaß zugelassen werden und andererseits kann ein "Ausfädeln" des Bügels 16 von dem Aufnahmeabschnitt 184 über den Zugangskanal 185 behindert werden. Der Führungsrand 188 und die Erhebung 196 verlaufen ineinander (schließen aneinander an) und schließen einen Winkel, insbesondere einen Winkel kleiner 150° ein. Dadurch erfährt ein an einem Führungsrand 188 "hochsteigender" Bügel 16 an der Anschlagfläche 191 eine Umkehr in der Bewegungsrichtung.

Die Fig. 4g bis 4j zeigen eine mögliche Ausführung einer Hängefördervorrichtung 1 mit einem der Transportträger 2' zum Transport von Hängeware 3 und der Führungsvorrichtung 10, entlang welcher der Transportträger 2' bewegbar ist, und/oder der Antriebsvorrichtung 11, welche auf den Transportträger 2' eine Antriebskraft überträgt.

Zusätzlich kann die Hängefördervorrichtung 1 eine Beladestation zum automatischen Beladen der Transportträger 2' mit Hängewaren 3, welche auf Bügel 16 hängen, umfassen.

Die Beladestation zum automatischen Beladen der Transportträger 2' umfasst eine unterhalb der Führungsvorrichtung 10 angeordnete und parallel zur Führungsvorrichtung 10 verlaufende Beladeschiene 200, auf welcher die Hängewaren 3 zugeführt und auf dieser bereitgestellt werden.

Die Beladeschiene 200 umfasst einen stromaufwärts liegenden Bereitstellabschnitt, in welchem die Hängewaren 3 auf Bügel 16 bereitgestellt werden können, und einen stromabwärts liegenden Übergabeabschnitt, in welchem die Hängeware 3 von der Beladeschiene 200 auf den Transportträger 2' übergeben werden kann. Der Bereitstellabschnitt bildet eine Führungsauflage 201 und der Übergabeabschnitt bildet eine Kulissenauflage 202 aus.

Die Kulissenauflage 202 kann gegenüber der Führungsauflage 201 eine in Transportrichtung 4 nach unten abfallende erste Führungsbahn 203 und im Längsverlauf eine an der ersten Führungsbahn 203 vorragende Auflauferhöhung 204 ausbilden.

Der Transportträger 2' bewegt den Bügel 16 aus dem in Fig. 4g dargestellten Bereitstellabschnitt in Transportrichtung 4 in den Übergabeabschnitt und entlang dem Übergabeabschnitt. Dabei gleitet der Bügel 16 entlang der Führungsauflage 201 und der Kulissenauflage 202. Entlang der Kulissenauflage 202 folgt der Bügel 16 dem Längsverlauf der ersten Führungsbahn 203, sodass der Bügel 16 nicht nur in Transportrichtung 4, sondern auch über den Führungskanal 185 in Richtung auf den Aufnahmeabschnitt 184 (insbesondere fortwährend) bewegt wird.

Wird die Auflauferhöhung 204 von dem Bügel 16 in Transportrichtung 4 überfahren, wie in Fig. 4h dargestellt, wird der Federbügel 192 soweit in Richtung der hinteren Seitenwand 181 gedrängt, dass der Bügel 16 über den aufgeweiteten Führungskanal 185 in Richtung auf den Aufnahmeabschnitt 184 bewegt werden kann. Der Bügel 16 drückt (verdrängt) alleinig durch die Gewichtskraft den Federbügel 192 aus der Sperrstellung (Fig. 4g) in Richtung zur hinteren Seitenwand 181 in die Freigabestellung.(Fig. 4h).

In Fig. 4i kann man erkennen, dass die Kulissenauflage 202 stromabwärts von der Auflauferhöhung 204 eine in Transportrichtung 4 nach unten abfallende zweite Führungsbahn 205 ausbildet, um den Bügel 16 nach dem Einführen in den Zugangskanal 185 noch durch die Kulissenauflage 202 zu führen. Dadurch ist eine besonders zuverlässige und sanfte Übergabe des Bügels 16 auf den Transportträger 2' möglich, wenngleich dies keineswegs zwingend zu verstehen ist.

Wie in Fig. 4i ersichtlich, befindet sich der Bügel 16 in dem / auf dem Aufnahmeabschnitt 184 und unterhalb der Transportsicherung 190, sodass der Bügel 16 den Federbügel 192 wieder freigibt und dieser wieder selbsttätig aus der Freigabestellung in die Sperrstellung zurückbewegt wird.

Die automatische Beladung des Transportträger 2' kann kontinuierlich im Durchlauf (ohne Stillstand) erfolgen.

In Fig. 4j ist die Hängefördervorrichtung 1 in Ansicht von vorne und teilweise geschnitten dargestellt. Zu erkennen ist die Beladeschiene 200, welche einen parallel in Transportrichtung 4 verlaufenden ersten Auflageabschnitt 206 und zweiten Auflageabschnitt 207 aufweist, sodass der Bügel 16 auf der Transportbewegung zumindest zum Teil entlang dem Bereitstellabschnitt und zumindest zum Teil entlang dem Übergabeabschnitt geführt ist.

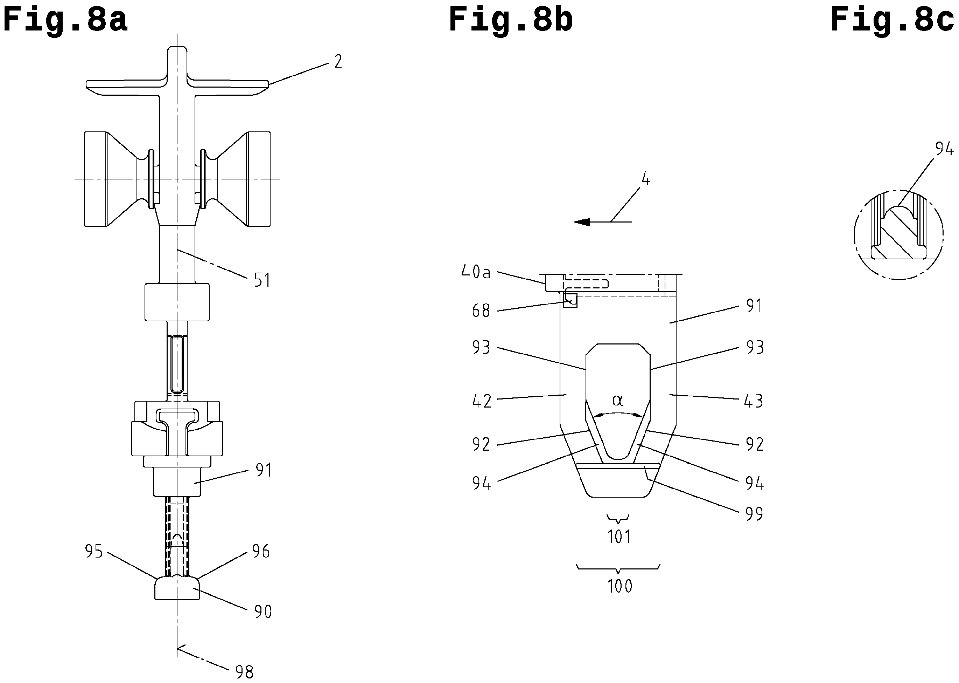

In der Fig. 8a, 8b, 8c ist der oben beschriebene Transportträger 2 zum Transport von Hängeware 3 gezeigt.

Der Basiskörper 30 ist, wie oben beschrieben, aufgebaut und wird an dieser Stelle nicht nochmals beschrieben.

Der Tragkörper 40a ist, wie oben beschrieben, aufgebaut, und umfasst dieser an der unteren Seitenwand 90 einen ersten Auflageabschnitt 95 und einen zweiten Auflageabschnitt 96. Der erste Auflageabschnitt 95 und zweite Auflageabschnitt 96 sind zu beiden Seiten einer zwischen der vorderen Seitenwand 42 und hinteren Seitenwand 43 aufgespannten Mittelebene 98 und jeweils mit Abstand zur Mittelebene 98 versetzt angeordnet. Dadurch kann zum Transport der Hängeware 3 auf dem Transportträger 2 der Bügel 16 zwischen den Führungsrändern 94 positioniert und auf dem ersten Auflageabschnitt 95 und zweiten Auflageabschnitt 96 abgestützt werden.

Der erste Auflageabschnitt 95 und zweite Auflageabschnitt 96 umfassen parallel zueinander verlaufende Kanten 99, deren Mindestlänge 100 größer ist als eine minimale Öffnungsweite 101 zwischen den Führungsrändern 94. Die (Längs)Kanten 99 bilden jeweils eine gerundete Auflagefläche aus.

Wie in Fig. 8b eingetragen schließen die Führungsränder 94 zwischen sich einen Öffnungswinkel "α" von weniger als 90° ein. Besonders bevorzugt ist ein Öffnungswinkel "α" von etwa 30°. Die Führungsränder 94 bilden jeweils eine gerundete Führungsfläche aus.

Schließlich wird auch festgehalten, dass die dargestellten Transportträger und Hängefördervorrichtungen in der Realität auch mehr oder auch weniger Bestandteile als dargestellt umfassen können. Teilweise können die dargestellten Transportträger und Hängefördervorrichtungen beziehungsweise deren Bestandteile auch unmaßstäblich und/oder vergrößert und/oder verkleinert dargestellt sein.

**Bezugszeichenaufstellung**

| | | | |
|---|---|---|---|
| 1 | Hängefördervorrichtung | 42 | vordere Seitenwand |
| 2, 2' | Transportträger | 43 | hintere Seitenwand |
| 3 | Hängeware | 50 | Verbindungsvorrichtung |
| 4 | Transportrichtung | 51 | Längsachse |
| 5 | Ware | 52 | Tragkörperanbindungsabschnitt |
| 10 | Führungsvorrichtung | | |
| 11 | Antriebsvorrichtung | 53 | Basiskörperanbindungsab- |
| 12 | Profilschiene | | schnitt |
| 13 | Reibband | 54 | Aufnahmeöffnung |
| 14 | Mitnehmerelement | 55 56 | Aufhängehaken Vorderwand |
| 15 | Antriebsmittel | 57 | Rückwand |
| 16 | Bügel | | |
| 17 | Hängeträger | 60 | Profilnut |
| 18 | Achse | 61 | Profilfortsatz |
| 19 | Rahmengestell | 62 | Hinterschneidung |
| | | 63 | Einschuböffnung |
| 20 | Achse | 64 | Profilsteg |
| 21 | Vorderwand | | |
| 22 | Hinterwand | 65 | Profilkopf |
| 23a | erster Seitenrand | 66 | Einschubrichtung |
| 23b | zweiter Seitenrand | 67 | Materialsteg |
| | | 68 | Verrieglungselement |
| 24 | Belade- und/oder Entlade öffnung | 69 | Federbügel |
| 25 | Seitenwandanschlag | 70 | Rastnase |
| 26a | erster Vorderwandabschnitt | 71 | Verrieglungselement |
| 26b | zweiter Vorderwandabschnitt | 72 | Rastöffnung |
| | | 80 | Aufnahmeschlitz |
| 27 | Bodenplatte | 81 | Stützfläche |
| 28a | erster Hinterwandabschnitt | 82 | Zugangskanal |
| 28b | zweiter Hinterwandab- | 85 | Aufnahmeschacht |
| | schnitt | 86 | Öffnungsschlitz |
| 29 | Transportauflage | 87 | Identifikationsmittel |
| 30 | Basiskörper | 88 | Federarm |
| 31 | Antriebsabschnitt | | |
| | | 89 | Transportträgeridentifikationsabschnitt |
| 32 | Laufrolle | | |
| 33 | Reibfläche | 90 | untere Seitenwand |
| 34 | Eingriffsfläche | 91 | obere Seitenwand |
| 40a | Tragkörper | 92 | unterer Wandabschnitt |
| 40b | Tragkörper | 93 | oberer Wandabschnitt |
| 94 | Führungsrand | | |
| 95 | erster Auflageabschnitt | | |
| 96 | zweiter Auflageabschnitt | | |
| 97 | Transportträger | | |
| 98 | Mittelebene | | |
| | | | |
| 99 | Kante | | |
| 100 | Mindestlänge | | |
| 101 | Öffnungsweite | | |
| 180 | vordere Seitenwand | | |
| 181 | hintere Seitenwand | | |
| | | | |
| 182 | untere Seitenwand | | |
| 183 | obere Seitenwand | | |
| 184 | Aufnahmeabschnitt | | |
| 185 | Zugangskanal | | |
| 188 | Führungsrand | | |
| | | | |
| 190 | Transportsicherung | | |
| 190' | Transportsicherung | | |
| 190" | Transportsicherung | | |
| 191 | Anschlagfläche | | |
| 192 | Federbügel | | |
| | | | |
| 192a, 192b | Federbügel | | |
| 193 | Anschlag | | |
| 194 | Führungselement | | |
| 195 | Führungselement | | |
| 196 | Erhebung | | |
| | | | |
| 197 | Lagerpunkt | | |
| 200 | Beladeschiene | | |
| 201 | Führungsauflage | | |
| 202 | Kulissenauflage | | |
| 203 | Führungsbahn | | |
| | | | |
| 204 | Auflauferhöhung | | |
| 205 | Führungsbahn | | |
| 206 | Auflageabschnitt | | |
| 207 | Auflageabschnitt | | |

## Patentansprüche

1. Transportträgersystem für eine Hängefördervorrichtung (1), umfassend
- einen ersten Tragkörper (40a) mit einem Basiskörperanbindungsabschnitt (53) und einer vollständig umschlossenen Aufnahmeöffnung (54) zum Transport von Hängeware (3),
- einen zweiten Tragkörper (40b) mit einem Basiskörperanbindungsabschnitt (53) und einem Aufhängehaken (55) zum Transport von Hängeware (3), und
- einen universell verwendbaren Basiskörper (30) mit
einem Antriebsabschnitt (31), welcher mit einer Führungsvorrichtung (10) und/oder einer Antriebsvorrichtung (11) der Hängefördervorrichtung (1) zusammenwirken kann, und
einem Tragkörperanbindungsabschnitt (52),
- wobei der erste Tragkörper (40a) oder der zweite Tragkörper (40b) über eine Verbindungsvorrichtung (50) auswechselbar am Basiskörper (30) befestigbar ist,
**dadurch gekennzeichnet, dass**
der erste Tragkörper (40a) mit dem universell verwendbaren Basiskörper (30) einen Transportträger (2; 2') in einer ersten Konfiguration bildet und der zweite Tragkörper (40b) mit dem universell verwendbaren Basiskörper (30) einen Transportträger (2; 2') in einer zweiten Konfiguration bildet,
wobei der Transportträger (2; 2') in der ersten Konfiguration mit einer vollständig umschlossenen Aufnahmeöffnung (54) zum Transport von Hängeware (3) ausgebildet ist und der Transportträger (2; 2') in der zweiten Konfiguration mit einem Aufhängehaken (55) zum Transport von Hängeware (3) ausgebildet ist,
wobei der Transportträger (2; 2') eine vertikale Längsachse (51) ausbildet, und
wobei die Verbindungsvorrichtung (50)
- in einem der Basis- und Tragkörperanbindungsabschnitte (52, 53) eine senkrecht zur Längsachse (51) verlaufende Profilnut (60) und in einem der Basis- und Tragkörperanbindungsabschnitte (52, 53) einen senkrecht zur Längsachse (51) verlaufenden Profilfortsatz (61) umfasst,
- wobei die Profilnut (60) eine Hinterschneidung (62) und in Richtung ihrer Längserstreckung endseitig eine Einschuböffnung (63) ausbildet,
- wobei der Profilfortsatz (61) einen Profilsteg (64) und einen am Profilsteg (64) querschnittserweiternd angeformten Profilkopf (65) umfasst,
- wobei der Profilfortsatz (61) über die Einschuböffnung (63) in einer senkrecht zur Längsachse (51) ausgerichteten Einschubrichtung (66) in die Profilnut (60) einschiebbar ist.

2. Transportträgersystem nach Anspruch 1, **dadurch gekennzeichnet, dass** die Verbindungsvorrichtung (50) komplementär zueinander ausgeführte und ineinandergreifende Formschlusselemente umfasst, wovon ein erstes Formschlusselement die Profilnut (60) und ein zweites Formschlusselement den Profilfortsatz (61) umfasst.

3. Transportträgersystem nach Anspruch 2, **dadurch gekennzeichnet, dass** die Verbindungsvorrichtung (50) eine verwindungssteife und tragfähige Formschlussverbindung bildet, wenn der Tragkörper (40a, 40b) über die Verbindungsvorrichtung (50) auswechselbar am Basiskörper (30) angebracht ist.

4. Transportträgersystem nach Anspruch 1, **dadurch gekennzeichnet, dass** die Profilnut (60) im Tragkörperanbindungsabschnitt (52) und der Profilfortsatz (61) im Basiskörperanbindungsabschnitt (53) angeordnet sind.

5. Transportträgersystem nach Anspruch 1 oder 4, **dadurch gekennzeichnet, dass** der Transportträger (2; 2') eine Vorderwand (56) und eine Rückwand (57) umfasst, und die Profilnut (60) durch eine sich von der Vorderwand (56) in Richtung der Rückwand (57) erstreckende Profilnut gebildet ist.

6. Transportträgersystem nach Anspruch 1, 4 oder 5, **dadurch gekennzeichnet, dass** die Profilnut (60) durch eine zum Tragkörper (40a, 40b) und über ihre Längserstreckung durchgehend geöffnete Profilnut gebildet ist.

7. Transportträgersystem nach Anspruch 1, **dadurch gekennzeichnet, dass** die Verbindungsvorrichtung (50) gegenseitig in Eingriff bringbare Verriegelungselemente (68, 71) umfasst, welche derart angeordnet und ausgebildet sind, dass der Basiskörper (30) und der Tragkörper (40a, 40b) in Längsrichtung der Profilnut (60) gegenseitig verschiebefest arretiert sind, wenn der auswechselbare Tragkörper (40a, 40b) am Basiskörper (30) angebracht ist.

8. Transportträgersystem nach Anspruch 7, **dadurch gekennzeichnet, dass** die Verriegelungselemente erste Verriegelungselemente (68) umfassen, welche in einem der Basis- und Tragkörperanbindungsabschnitte (52, 53) zu beiden Seiten der Profilnut (60) angeordnete elastisch nachgiebige Federarme mit jeweils an einem Federbügel (69) angeformter Rastnase (70) gebildet sind, und zweite Verriegelungselemente (71) umfassen, welche in einem der Basis- und Tragkörperanbindungsabschnitte (52, 53) zu beiden Seiten des Profilsteges (64) angeordnete Rastöffnungen (72) gebildet sind.

9. Transportträgersystem nach Anspruch 8, **dadurch gekennzeichnet, dass** die Verbindungsvorrichtung (50) in einem der Basis- und Tragkörperanbindungsabschnitte (52, 53) zu beiden Seiten des Profilsteges (64) angeordnete Aufnahmeschlitze (80) umfasst, welche jeweils eine in Einschubrichtung (66) des Tragkörpers (40a, 40b) verlaufende Stützfläche (81) und eine in einem in Einschubrichtung (66) des Tragkörpers (40a, 40b) hinterem Endbereich angeordnete Rastöffnung (72) ausbilden.

10. Transportträgersystem nach Anspruch 1, **dadurch gekennzeichnet, dass** der zweite Tragkörper (40b) zusätzlich umfasst
- eine im Wesentlichen parallel zur Längsachse (51) verlaufende vordere Seitenwand (180),
- eine im Wesentlichen parallel zur Längsachse (51) verlaufende hintere Seitenwand (181),
- eine zwischen der vorderen Seitenwand (180) und hinteren Seitenwand (181) verlaufende untere Seitenwand (182),
- einen durch die vordere Seitenwand (180), hintere Seitenwand (181) und untere Seitenwand (182) gebildeten Aufnahmeabschnitt (184) zum Aufhängen eines Bügels (16) der Hängeware (3),
- einen in den Aufnahmeabschnitt (184) mündenden Zugangskanal (185), über welchen der Bügel (16) der Hängeware (3) in den Aufnahmeabschnitt (184) eingeführt wird,
- an der vorderen Seitenwand (180) und hinteren Seitenwand (181) in unteren Wandabschnitten in Richtung zur unteren Seitenwand (182) geneigt aufeinander zulaufende Führungsränder (188), und
- eine Transportsicherung (190; 190'; 190"), welche mit einem Vertikalabstand oberhalb des Aufnahmeabschnitts (184) angeordnet ist und eine Anschlagfläche (191) ausbildet, welche Anschlagfläche (191) eine Relativverlagerung des Bügels (16) in Richtung zur Transportsicherung (190) begrenzt oder erschwert.

11. Transportträgersystem nach Anspruch 10, **dadurch gekennzeichnet, dass** die Transportsicherung (190) einen an der hinteren Seitenwand (181) angeordneten, elastisch nachgiebigen Federarm mit einem Federbügel (192) und einem am vorragenden Ende angeordneten Anschlag (193) aufweist, wobei der Anschlag (193) in den Zugangskanal (185) vorragt und an seiner dem Aufnahmeabschnitt (184) zugewandten Seitenwand die Anschlagfläche (191) ausbildet.

12. Transportträgersystem nach Anspruch 10 oder 11, **dadurch gekennzeichnet, dass** die hintere Seitenwand (181) und der Federbügel (192) miteinander in Eingriff bringbare Führungselemente (194, 195) umfassen.

13. Transportträgersystem nach Anspruch 10, **dadurch gekennzeichnet, dass** die Transportsicherung (190') einen an der vorderen Seitenwand (180) angeordneten, elastisch nachgiebigen ersten Federarm mit einem Federbügel (192a) und einem am vorragenden Ende angeordneten Anschlag (193) und einen an der hinteren Seitenwand (181) angeordneten, elastisch nachgiebigen zweiten Federarm mit einem Federbügel (192b) und einem am vorragenden Ende angeordneten Anschlag (193) aufweist, wobei die Anschläge (193) jeweils in den Zugangskanal (185) vorragen und an einer dem Aufnahmeabschnitt (184) zugewandten Seitenwand die Anschlagflächen (191) ausbilden.

14. Transportträgersystem nach Anspruch 10, **dadurch gekennzeichnet, dass** die Transportsicherung (190") eine an der hinteren Seitenwand (181) angeordnete Erhebung (196) umfasst, welche in den Zugangskanal (185) vorragt und die Anschlagfläche (191) ausbildet.

15. Transportträgersystem nach Anspruch 1, **dadurch gekennzeichnet, dass** der Basiskörper (30) einen senkrecht zur Längsachse (51) verlaufenden Aufnahmeschacht (85) mit einem in Richtung seiner Längserstreckung endseitig ausgebildeten Öffnungsschlitz (86) und ein über den Öffnungsschlitz (86) in den Aufnahmeschacht (85) einsteckbares Identifikationsmittel (87), insbesondere einen Transponder, umfasst.

16. Transportträgersystem nach Anspruch 15, **dadurch gekennzeichnet, dass** der Aufnahmeschacht (85) einen zum Tragkörper (40a, 40b) geöffneten Boden und einen in Richtung zum Boden vorragenden elastisch nachgiebigen Federarm (88) mit einer Auflagefläche umfasst, sodass sich das Identifikationsmittel (87), insbesondere der Transponder, im Aufnahmeschacht (85) an der Auflagefläche abstützt und dieses durch den Federarm (88) gehalten wird.

17. Transportträgersystem nach Anspruch 15 oder 16, **dadurch gekennzeichnet, dass** der Aufnahmeschacht (85) und das Identifikationsmittel (87), insbesondere der Transponder, zwischen dem Antriebsabschnitt (31) und dem Tragkörperanbindungsabschnitt (52) angeordnet sind.

## Claims

1. A transport carrier system for an overhead conveying device (1), comprising
- a first supporting body (40a) with a base body connecting section (53) and a completely enclosed receiving opening (54) for transporting a hanging article (3),
- a second supporting body (40b) with a base body connecting section (53) and a suspension hook (55) for transporting a hanging article (3), and
- a universally applicable base body (30) having
a drive section (31), which can cooperate with a guide device (10) and/or a drive device (11) of the overhead conveying device (1), and
a supporting body connecting section (52),
- wherein the first supporting body (40a) or the second supporting body (40b) can be exchangeably fastened to the base body (30) by means of a connecting device (50),
**characterized in that**
the first supporting body (40a) together with the universally applicable base body (30) forms a transport carrier (2; 2') in a first configuration, and the second supporting body (40b) together with the universally applicable base body (30) forms a transport carrier (2; 2') in a second configuration,
wherein the transport carrier (2; 2') in the first configuration has a completely enclosed receiving opening (54) for transporting a hanging article (3), and the transport carrier (2; 2') in the second configuration has a suspension hook (55) for transporting a hanging article (3),
wherein the transport carrier (2; 2') forms a vertical longitudinal axis (51), and wherein the connecting device (50)
- comprises a profile groove (60) extending perpendicular to the longitudinal axis (51) in one of the base and supporting body connecting sections (52, 53), and a profile projection (61) extending perpendicular to the longitudinal axis (51) in one of the base and supporting body connecting sections (52, 53),
- wherein the profile groove (60) forms an undercut (62) and an insertion opening (63) on the end side in the direction of its longitudinal extension,
- wherein the profile projection (61) comprises a profile web (64) and a profile head (65) formed on the profile web (64) so as to expand the cross-section,
- wherein the profile projection (61) can be inserted into the profile groove (60) via the insertion opening (63) in an insertion direction (66) oriented perpendicular to the longitudinal axis (51).

2. The transport carrier system according to claim 1, **characterized in that** the connecting device (50) comprises positive engagement elements, which are designed to complement each other and which mesh with each other, of which a first positive engagement element comprises the profile groove (60) and a second positive engagement element comprises the profile projection (61).

3. The transport carrier system according to claim 2, **characterized in that** the connecting device (50) forms a torsionally rigid and stable positive connection when the supporting body (40a, 40b) is fastened to the base body (30) so as to be exchangeable by means of the connecting device (50).

4. The transport carrier system according to claim 1, **characterized in that** the profile groove (60) is arranged in the supporting body connecting section (52), and the profile projection (61) is arranged in the base body connecting section (53).

5. The transport carrier system according to claim 1 or 4, **characterized in that** the transport carrier (2; 2') comprises a front wall (56) and a rear wall (57), and the profile groove (60) is formed by a profile groove extending from the front wall (56) in the direction of the rear wall (57).

6. The transport carrier system according to claim 1, 4 or 5, **characterized in that** the profile groove (60) is formed by a profile groove continuously opened toward the supporting body (40a, 40b) and along its longitudinal extension.

7. The transport carrier system according to claim 1, **characterized in that** the connecting device (50) comprises mutually engageable locking elements (68, 71), which are arranged and formed such that the base body (30) and the supporting body (40a, 40b) are arrested so as to be mutually prevented from being displaced in the longitudinal direction of the profile groove (60), if the exchangeable supporting body (40a, 40b) is mounted on the base body (30).

8. The transport carrier system according to claim 7, **characterized in that** the locking elements comprise first locking elements (68) which are formed as elastically resilient spring arms, each having a locking lug (70) formed on a spring clip (69), in one of the base and supporting body connection sections (52, 53) on both sides of the profile groove (60), and second locking elements (71) which are formed as locking openings (72) arranged in one of the base and supporting body connection sections (52, 53) on both sides of the profile web (64).

9. The transport carrier system according to claim 8, **characterized in that** the connecting device (50) comprises receiving slots (80) arranged in one of the base body and supporting body connecting sections (52, 53) on both sides of the profile web (64), each of which forms a support surface (81) extending in the insertion direction (66) of the supporting body (40a, 40b) and a locking opening (72) arranged in a rear end region in the insertion direction (66) of the supporting body (40a, 40b).

10. The transport carrier system according to claim 1, **characterized in that** the second supporting body (40b) additionally comprises
- a front side wall (180) running essentially in parallel to the longitudinal axis (51),
- a rear side wall (181) running essentially in parallel to the longitudinal axis (51),
- a lower side wall (182) extending between the front side wall (180) and the rear side wall (181),
- a receiving section (184) for hanging a hanger (16) of the hanging article (3), formed by the front side wall (180), the rear side wall (181) and the lower side wall (182),
- an access channel (185) leading into the receiving section (184), via which access channel (185) the hanger (16) of the hanging article (3) is inserted into the receiving section (184),
- guide edges (188), tapering towards each other in the direction toward the lower side wall (182), on the front side wall (180) and rear side wall (181) in lower wall sections, and
- a transport lock (190; 190'; 190"), which is arranged above the receiving section (184) with a vertical distance, and forms a stop surface (191), which stop surface (191) limits or impedes a relative shift of the hanger (16) in the direction toward the transport lock (190).

11. The transport carrier system according to claim 10, **characterized in that** the transport lock (190) comprises an elastically resilient spring arm arranged on the rear side wall (181), which spring arm has a spring clip (192) and a stop (193) arranged on the protruding end, wherein the stop (193) protrudes into the access channel (185) and forms the stop surface (191) on its side wall facing the receiving section (184).

12. The transport carrier system according to claim 10 or 11, **characterized in that** the rear side wall (181) and the spring clip (192) comprise guide elements (194, 195) which can be brought into engagement with one another.

13. The transport carrier system according to claim 10, **characterized in that** the transport lock (190') comprises an elastically resilient first spring arm arranged on the front side wall (180), which spring arm has a spring clip (192a) and a stop (193) arranged on the protruding end, and an elastically resilient second spring arm, which is arranged on the rear side wall (181), which second spring arm has a spring clip (192b) and a stop (193) arranged on the protruding end, wherein the stops (193) each protrude into the access channel (185) and form the stop surfaces (191) on a side wall facing the receiving section (184).

14. The transport carrier system according to claim 10, **characterized in that** the transport lock (190") comprises an raised area (196) arranged on the rear side wall (181), which raised area (196) protrudes into the access channel (185) and forms the stop surface (191).

15. The transport carrier system according to claim 1, **characterized in that** the base body (30) comprises a receiving chamber (85) extending perpendicular to the longitudinal axis (51) and having an opening slot (86) formed on the end side in the direction of its longitudinal extension, and an identifying means (87), in particular a transponder, which can be inserted into the receiving chamber (85) via the opening slot (86).

16. The transport carrier system according to claim 15, **characterized in that** the receiving chamber (85) comprises a base opened toward the supporting body (40a, 40b) and an elastically resilient spring arm (88), which spring arm has a rest surface and protrudes in the direction toward the base, so that the identifying means (87), in particular the transponder, is supported on the rest surface in the receiving chamber (85) and is held by means of the spring arm (88).

17. The transport carrier system according to claim 15 or 16, **characterized in that** the receiving chamber (85) and the identifying means (87), in particular the transponder, are arranged between the drive section (31) and the supporting body connecting section (52).

## Revendications

1. Système de support de transport pour un dispositif de convoyage suspendu (1) comprenant
- un premier corps de support (40a) avec une portion de liaison de corps de base (53) et une ouverture de logement (54) entièrement entourée pour le transport d'un article suspendu (3),
- un deuxième corps de support (40b) avec une portion de liaison de corps de base (53) et un crochet de suspension (55) pour le transport d'un article suspendu (3) et
- un corps de base (30) à usage universel avec
une portion d'entraînement (31), qui peut interagir avec un dispositif de guidage (10) et/ou un dispositif d'entraînement (11) du dispositif de convoyage suspendu (1) et
une portion de liaison de corps de support (52),
- dans lequel le premier corps de support (40a) et le deuxième corps de support (40b) peut être fixé de manière interchangeable au corps de base (30) par l'intermédiaire d'un dispositif de raccordement (50),
**caractérisé en ce que**
le premier corps de support (40a) avec le corps de base (30) à usage universel constitue un support de transport (2 ; 2') dans une première configuration et le deuxième corps de support (40b) avec le corps de base (30) à usage universel constitue un support de transport (2 ; 2') dans une deuxième configuration,
dans lequel le support de transport (2 ; 2') est réalisé, dans la première configuration, avec une ouverture de logement (54) entièrement entourée pour le transport d'un article suspendu (3) et le support de transport (2 ; 2') est réalisé, dans la deuxième configuration, avec un crochet de suspension (55) pour le transport de l'article suspendu (3),
dans lequel le support de transport (2 ; 2') définit un axe longitudinal vertical (51) et dans lequel le dispositif de raccordement (50)
- comprend, dans une des portions de liaison de corps de support et de base (52, 53), une rainure profilée (60) s'étendant perpendiculairement à l'axe longitudinal (51) et, dans une des portions de liaison de corps de support et de base (52, 53), un prolongement profilé (61) s'étendant perpendiculairement à l'axe longitudinal (51),
- dans lequel la rainure profilée (60) forme une contre-dépouille (62) et, du côté de l'extrémité, en direction de son extension longitudinale, une ouverture d'insertion (63),
- dans lequel le prolongement profilé (61) comprend une nervure profilée (64) et comprend, sur la nervure profilée (64), une tête profilée (65) formée par élargissement de la section transversale,
- dans lequel le prolongement profilé (61) peut être inséré par l'ouverture d'insertion (63) dans la rainure profilée (60) dans une direction d'insertion (66) orientée perpendiculairement à l'axe longitudinal (51).

2. Système de support de transport selon la revendication 1, **caractérisé en ce que** le dispositif de raccordement (50) comprend des éléments de complémentarité de forme conçus de manière complémentaire entre eux et s'emboîtant l'un dans l'autre, dont un premier élément de complémentarité de forme comprend la rainure profilée (60) et un deuxième élément de complémentarité comprend le prolongement profilé (61).

3. Système de support de transport selon la revendication 2, **caractérisé en ce que** le dispositif de raccordement (50) constitue une liaison par complémentarité de forme résistante à la torsion et solide lorsque le corps de support (40a, 40b) est monté de manière interchangeable sur le corps de base (30) par l'intermédiaire du dispositif de raccordement (50).

4. Système de support de transport selon la revendication 1, **caractérisé en ce que** la rainure profilée (60) est disposée dans la portion de liaison de corps de support (52) et le prolongement profilé (61) est disposé dans la portion de liaison de corps de base (53).

5. Système de support de transport selon la revendication 1 ou 4, **caractérisé en ce que** le support de transport (2 ; 2') comprend une paroi avant (56) et une paroi arrière (57) et la rainure profilée (60) est constituée d'une rainure profilée s'étendant à partir de la paroi avant (56) en direction de la paroi arrière (57).

6. Système de support de transport selon la revendication 1, 4 ou 5, **caractérisé en ce que** la rainure profilée (60) est constituée d'une rainure profilée ouverte vers le corps de support (40a, 40b) et de manière continue sur son extension longitudinale.

7. Système de support de transport selon la revendication 1, **caractérisé en ce que** le dispositif de raccordement (50) comprend des éléments de verrouillage (68, 71) s'emboîtant l'un dans l'autre, qui sont disposés et conçus de sorte que le corps de base (30) et le corps de support (40a, 40b) sont fixés de manière bloquée en déplacement l'un par rapport à l'autre dans la direction longitudinale de la rainure profilée (60) lorsque le corps de support (40a, 40b) interchangeable est monté sur le corps de base (30).

8. Système de support de transport selon la revendication 7, **caractérisé en ce que** les éléments de verrouillage comprennent des premiers éléments de verrouillage (68) qui sont constitués, dans une des portions de liaison de corps de support et de base (52, 53), des bras élastiques flexibles disposés des deux côtés de la rainure profilée (60), avec chacun un embout d'encliquetage (70) formé sur un étrier élastique (69), et des deuxièmes éléments de verrouillage (71) qui sont constitués, dans une des portions de liaison de corps de support et de base (52, 53), des ouvertures d'encliquetage (72) disposés des deux côtés de la nervure profilée (64).

9. Système de support de transport selon la revendication 8, **caractérisé en ce que** le dispositif de raccordement (50) comprend, dans une des portions de liaison de corps de support et de base (52, 53), des fentes de logement (80) disposées des deux côtés de la nervure profilée (64), qui constituent chacune une surface d'appui (81) s'étendant dans la direction d'insertion (66) du corps de support (40a, 40b) et une ouverture d'encliquetage (72) disposée dans la zone d'extrémité arrière dans la direction d'insertion (66) du corps de support (40a, 40b).

10. Système de support de transport selon la revendication 1, **caractérisé en ce que** le deuxième corps de support (40b) comprend en outre
- une paroi latérale avant (180) s'étendant de manière globalement parallèle à l'axe longitudinal (51),
- une paroi latérale arrière (181) s'étendant de manière globalement parallèle à l'axe longitudinal (51),
- une paroi latérale inférieure (182) s'étendant entre la paroi latérale avant (180) et la paroi latérale arrière (181),
- une portion de logement (184) formée par la paroi latérale avant (180), la paroi latérale arrière (181) et la paroi latérale inférieure (182), pour la suspension d'un étrier (16) de l'article suspendu (3),
- un canal d'accès (185) débouchant dans la portion de logement (184), par l'intermédiaire duquel l'étrier (16) de l'article suspendu (3) est introduit dans la portion de logement (184),
- des bords de guidage (188) convergeant l'un vers l'autre, de manière inclinée, au niveau de la paroi latérale avant (180) et de la paroi latérale arrière (181), dans des portions de parois inférieures en direction de la paroi latérale inférieure (182) et
- une fixation de transport (190 ; 190' ; 190") qui est disposée avec une distance verticale au-dessus de la portion de logement (184) et forme une surface de butée (191), cette surface de butée (191) limitant ou compliquant un déplacement relatif de l'étrier (16) en direction de la fixation de transport (190).

11. Système de support de transport selon la revendication 10, **caractérisé en ce que** la fixation de transport (190) comprend un bras élastique flexible, disposé au niveau de la paroi latérale arrière (181), avec u étrier élastique (192), et une butée (193) disposée au niveau de l'extrémité en saillie, dans lequel la butée (193) dépasse dans le canal d'accès (185) et forme la surface de butée (191) au niveau de sa paroi latérale orientée vers la portion de logement (184).

12. Système de support de transport selon la revendication 10 ou 11, **caractérisé en ce que** la paroi latérale arrière (181) et l'étrier élastique (192) comprennent des éléments de guidage (194, 195) pouvant être emboîtés entre eux.

13. Système de support de transport selon la revendication 10, **caractérisé en ce que** la fixation de transport (190') comprend un premier bras élastique flexible, disposé au niveau de la paroi latérale avant (180), avec un étrier élastique (192a) et une butée (193) disposée à l'extrémité en saillie, et un deuxième bras élastique flexible, disposé au niveau de la paroi latérale arrière (181), avec un étrier élastique (192b) et une butée (193) disposée à l'extrémité en saillie, dans lequel les butées (193) dépassent chacune dans le canal d'accès (185) et forment les surfaces de butée (191) au niveau d'une paroi latérale orientée vers la portion de logement (184).

14. Système de support de transport selon la revendication 10, **caractérisé en ce que** la fixation de transport (190") comprend un bossage (196) disposé au niveau de la paroi latérale arrière (181), qui dépasse dans le canal d'accès (185) et qui forme la surface de butée (191).

15. Système de support de transport selon la revendication 1, **caractérisé en ce que** le corps de base (30) comprend un conduit de logement (85) s'étendant perpendiculairement à l'axe longitudinal (51) avec une fente d'ouverture (86) réalisée côté extrémité en direction de son extension longitudinale et un moyen d'identification (87) pouvant être enfiché par l'intermédiaire de la fente d'ouverture (86) dans le conduit de logement (85), plus particulièrement un transpondeur.

16. Système de support de transport selon la revendication 15, **caractérisé en ce que** le conduit de logement (85) comprend un fond ouvert vers le corps de support (40a, 40b) et un bras élastique flexible (88) dépassant en direction du fond, avec une surface d'appui, de sorte que le moyen d'identification (87), plus particulièrement le transpondeur, s'appuie dans le conduit de logement (85) contre la surface d'appui et est celui-ci est maintenu par le bras élastique (88).

17. Système de support de transport selon la revendication 15 ou 16, **caractérisé en ce que** le conduit de logement (85) et le moyen d'identification (87), plus particulièrement le transpondeur, sont disposés entre la portion d'entraînement (31) et la portion de liaison de corps de support (52).
